# EUROPEAN PATENT APPLICATION

(11) **EP 1 300 806 A2**
(43) Date of publication of application: **09.04.2003**
(21) Application number: 02003264.5
(22) Date of filing: 21.02.2002
(51) Int. Cl.: G06T 17/10

(54) **Design support method and design support apparatus**

(30) Priority: 02.10.2001 JP 2001306255
(71) Applicant: Hitachi, Ltd., Chiyoda-ku, Tokyo 101-8010 (JP)
(72) Inventor: Shiroyama, Koji, Hitachi, Ltd., Intell.Prop.Group, Chiyoda-ku, Tokyo 100-8220 (JP); Minami Shunsuke, Hitachi, Ltd., Intell.Prop.Group, Chiyoda-ku, Tokyo 100-8220 (JP); Yoshida, Tadashi, Hitachi, Ltd., Intell.Prop.Group, Chiyoda-ku, Tokyo 100-8220 (JP)
(74) Representative: Beetz & Partner Patentanwälte

(57) **Abstract**

A design support apparatus is provided with a feature storage means (105) for storing feature data, a feature type selection means (101) for selecting a feature to be arranged from this means (105), a parameter input means (103) for inputting parameters of the selected feature with reference to result data, an arrangement means (104) for arranging the selected feature depending on the parameters inputted, a component storage means (106) for storing component data and a result data reference means (102) for searching component data having the feature selected by the feature type selection means (101) from a component storage means (106) and displaying a result of the component data. Thereby, result data of the features of component in the past can be displayed in the form of a list.

## Description

### FIELD OF THE INVENTION

The present invention relates to design based on feature modeling and particularly to a design support system in which parameters of feature can be inputted with reference to result data.

### BACKGROUND OF THE INVENTION

A modeling system has been proposed for design of a three-dimensional form such as a machinery product in which features having a set of shapes characterized in the processes for a rectangular parallelepiped, column, groove and angled-corner are combined. For example, in the case of modeling a shape of product in which holes are bored at the upper surface of a rectangular parallelepiped, this rectangular parallelepiped is disposed by inputting first the length of three sides and position of the rectangular parallelepiped, and a hole is then disposed also by inputting the center position, diameter and depth of the hole on the upper surface. A three-dimensional CAD product or the like such as Unigraphics by EDS Corporation includes a function to define features and a function to dispose features.

As a system to assure effective modeling through combination of features, Japanese Unexamined Patent Publication No. 78090/1991 discloses a system in which commands for manipulation of shape and parameters thereof are accumulated within a tree-structure to easily reproduce the forms generated in the past.

Moreover, it has also been attempted that a library is configured in unit of component or a plurality of components for re-use on the occasion of designing a product. For example, the reference "Application of Three-Dimensional Design into A transformer"(Vol. 75, No. 2, 2001, pp. 18-21, issued by the Technical Report of Mitsubishi Electric Co., Ltd.) reports improvement in efficiency of design by previously generating a component standard model of the similar shape corresponding to changes of size.

A time required to generate a form can be reduced with a modeling through combination of features but a longer time is usually rather required in the design step to investigate types or parameters of features to be combined. On the other hand, design process is continued with reference to types and parameters of features of components manufactured in the past. Therefore, if it is possible to display in the form of a list a plurality of components manufactured in the past and parameters of respective components by means of a table or a graph, the time required for investigation can be shortened and thereby design efficiency can also be improved.

In the system disclosed in Japanese Unexamined Patent Publication No. 78090/1991, manipulation record in the design of a component is accumulated. Therefore, it is impossible to display parameters of a plurality of components in the form of a list.

A problem explained above is also found in the design in which component or unit is defined in the form of a library.

### SUMMARY OF THE INVENTION

It is therefore an object of the present invention to display feature parameters of the components manufactured in the past in the form of a list in view of shortening the time required for investigation of feature types and parameters.

An object of the present invention may be achieved by a design support apparatus comprising a feature storage means for storing feature data, a feature type selection means for selecting features to be arranged from the features stored in the feature storage means, a parameter input means for inputting parameters of features selected by the feature type selection means, an arrangement means for arranging the features selected by the feature type selection means depending on the parameters inputted by the parameter input means, a component storage means for storing component data and a result data reference means for searching and displaying result data of features selected by the feature type selection means from the component data stored in the component storage means.

Otherwise, the above object of the present invention may be achieved by a design support system comprising a feature type selection step for selecting features to be arranged, a parameter input step for inputting parameters of the features selected in the feature type, an arrangement step for arranging the features selected by the selection step depending on the parameters inputted in the parameter input step and a result data reference step for displaying result data of the features selected in the selection step.

Otherwise, the above object of the present invention may be achieved by a storage medium in which respective functions of the design support apparatus are stored or by a program which executes the design support method.

### BRIEF DESCRIPTION OF THE DRAWINGS

Fig. 1 is a structure diagram depending on a first embodiment of a design support apparatus of the present invention.
Fig. 2 is a data format diagram showing an example of a feature data.
Fig. 3 is a data format diagram showing an example of component data.
Fig. 4 is a detail structure diagram of a result data reference means.
Fig. 5 is a data format diagram showing an example of feature result parameters.
Figs . 6A, 6B and 6C are manipulation image diagrams of the design support apparatus depending on the first embodiment of the present invention.
Fig. 7 is a structure diagram depending on a second embodiment of the design support apparatus of the present invention.
Fig. 8 is a data format diagram showing an example of the component data.
Fig. 9 is a detail structure diagram of a product result data reference means.
Fig. 10 is a data format diagram showing an example of result data including the product data.
Fig. 11 is a diagram showing an example of a table displayed by a product result data display means.
Fig. 12 is a diagram showing an example of a table displayed by the product result data display means.
Fig. 13 is a graph displayed by the product result data display means.
Fig. 14 is a structure diagram depending on a third embodiment of the design support apparatus of the present invention.
Fig. 15 is a structure diagram depending on a fourth embodiment of the design support apparatus of the present invention.
Fig. 16 is a flow diagram depending on the first embodiment of a design support method of the present invention.
Fig. 17 is a detail flow diagram depending on a result data reference step.
Fig. 18 is a flow diagram depending on the second embodiment of the design support method of the present invention.
Fig. 19 is a detail flow diagram of a product result data reference step of Fig. 18.
Fig. 20 is a flow diagram depending on a third embodiment of the design support method of the present invention.
Fig. 21 is a flow diagram depending on a fourth embodiment of the design support method of the present invention.
Fig. 22 is a structure diagram depending on a fifth embodiment of the design support apparatus of the present invention.
Fig. 23 is a data format diagram showing an example of a feature group data.
Figs. 24A, 24B, 24C are manipulation message diagrams of the design support apparatus depending on the fourth embodiment of the present invention.
Fig. 25 is a structure diagram depending on a sixth embodiment of the design support apparatus of the present invention.
Fig. 26 is a diagram showing an example of a table displayed by a product result parameter display means.
Fig. 27 is a diagram showing the other example of a table displayed by the product result parameter display means.
Fig. 28 is a graph displayed by the product result parameter display means.
Fig. 29 is a structure diagram depending on a seventh embodiment of the design support apparatus of the present invention.
Fig. 30 is a structure diagram depending on eighth embodiment of the design support apparatus of the present invention.
Fig. 31 is a flow diagram depending on the fifth embodiment of the design support method of the present invention.
Fig. 32 is a flow diagram depending on the sixth embodiment of the design support method of the present invention.
Fig. 33 is a flow diagram depending on the seventh embodiment of the design support method of the present invention.
Fig. 34 is a flow diagram depending on the eighth embodiment of the design support method of the present invention.
Fig. 35 is a structure diagram depending on a ninth embodiment of the design support apparatus of the present invention.
Figs. 36A, 36B, 36C, 36D are manipulation image diagrams of the ninth embodiment of the present invention.
Fig. 37 is a structure diagram depending on a tenth embodiment of the design support apparatus of the present invention.
Fig. 38 is a structure diagram depending on an eleventh embodiment of the design support apparatus of the present invention.
Fig. 39 is a structure diagram depending on a twelfth embodiment of the design support apparatus of the present invention.
Fig. 40 is a flow diagram depending on the ninth embodiment of the design support method of the present invention.
Fig. 41 is a flow diagram depending on the tenth embodiment of the design support method of the present invention.
Fig. 42 is a flow diagram depending on the eleventh embodiment of the design support method of the present invention.
Fig. 43 is a flow diagram depending on the twelfth embodiment of the design support method of the present invention.
Fig. 44 is an external appearance diagram of a computer system.
Fig. 45 is an external appearance diagram of a magnetic disc.
Fig. 46 is an external appearance diagram of a CD-ROM.
Fig. 47 is a structure diagram depending on thirteenth embodiment of the design support apparatus of the present invention.
Fig. 48 is a data format diagram of a library data.
Fig. 49 is a data format diagram of a product structure data.
Fig. 50 is a detail structure diagram of a library result data reference means.
Fig. 51 is a data format diagram of the result data in unit of library.
Figs. 52A to 52C are manipulation image diagrams of the thirteenth embodiment.
Fig. 53 is a graph displayed by the library result data reference means.
Fig. 54 is a structure diagram depending on a fourteenth embodiment of the design support apparatus of the present invention.
Fig. 55 is a flow diagram depending on the thirteenth embodiment of the design support method of the present invention.
Fig. 56 is a detail flow diagram of a library result reference step.
Fig. 57 is a flow diagram depending on the fourteenth embodiment of the design support method of the present invention.
Fig. 58 is a structure diagram depending on a fifteenth embodiment of the present invention.
Fig. 59 is a data format diagram of a library group data.
Figs. 60A to 60C are manipulation image diagrams depending on the fifteenth embodiment of the present invention.
Fig. 61 is a graph displayed by the library result data reference means.
Fig. 62 is a structure diagram depending on a sixteenth embodiment of the design support apparatus of the present invention.
Fig. 63 is a flow diagram depending on the fifteenth embodiment of the design support method of the present invention.
Fig. 64 is a flow diagram depending the sixteenth embodiment of the design support method of the present invention.
Fig. 65 is a structure diagram depending on a seventeenth embodiment of the design support apparatus of the present invention.
Figs. 66A to 66D are manipulation image diagrams depending on the seventeenth embodiment.
Fig. 67 is a structure diagram depending on an eighteenth embodiment of the design support apparatus of the present invention.
Fig. 68 is a flow diagram depending on the seventeenth embodiment of the design support method of the present invention.
Fig. 69 is a flow diagram depending on the eighteenth embodiment of the design support method of the present invention.

### DETAILED DESCRIPTION OF THE EMOBODIMENTS

The present invention relates to a design support apparatus, a design support method, a storage medium or a program which can refer to result data for a feature having a set of shapes characterized in the processes for a rectangular parallelepiped, column, hole, groove and angled-corner or the like or a unit library which is composed of component or a plurality of components. In the former half , a design storage apparatus and method provided for a feature will be explained, while in the latter half, a design storage apparatus and method provided for a component/unit library will be explained.

First, a design support apparatus and a design support method with which a type of feature is selected for the purpose of reference with result data of features of the same kind will be explained.

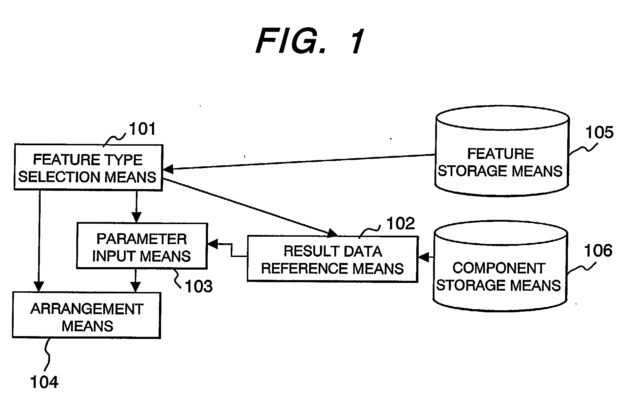

Fig. 1 shows an example of a first structure of an embodiment of a design support apparatus of the present invention. A feature type selection means 101 selects a feature to be arranged from the features stored in a feature storage means 105. A result data reference means 102 searches component data having a feature of the same type as the feature selected by the feature type selection means 101 and displays such result data. A parameter input means 103 inputs parameters of the features selected by the feature type selection means 101. In this case, reference is made to the parameter of the result data. An arrangement means 104 disposes a feature selected by the feature type selection means 101 depending on a parameter inputted by the parameter input means 103.

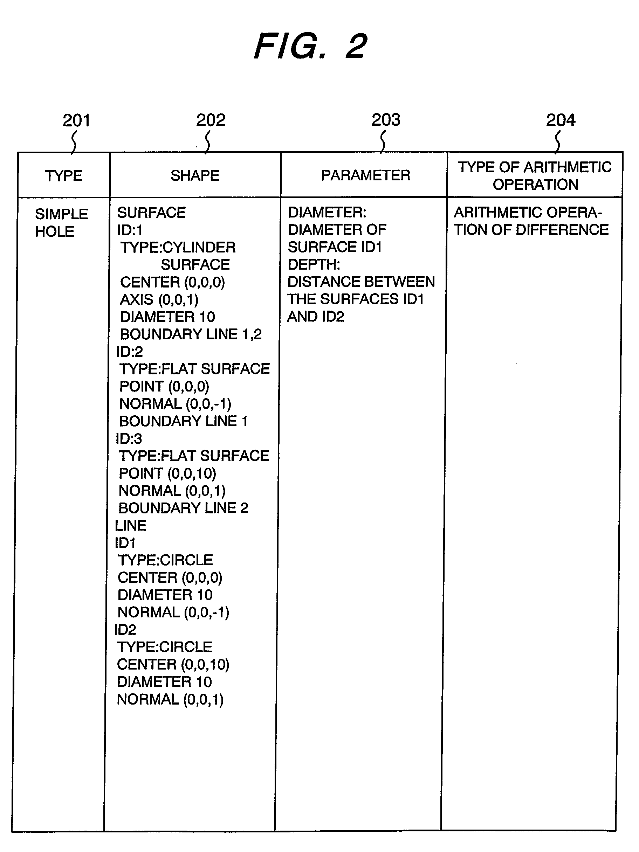

Fig. 2 shows an example of a feature data stored in the feature storage means 105. The feature data is formed at least of a type 201, a shape information 202, a parameter information 203 and a type of arithmetic operation 204. Parameters of feature include a parameter for determining a size of shape, a parameter for determining a position of arrangement or direction of feature. The parameter for determining the position of arrangement or direction may be omitted because these parameters can be defined not dependent on the type of feature. All parameters in Fig. 2 determine sizes of a shape.

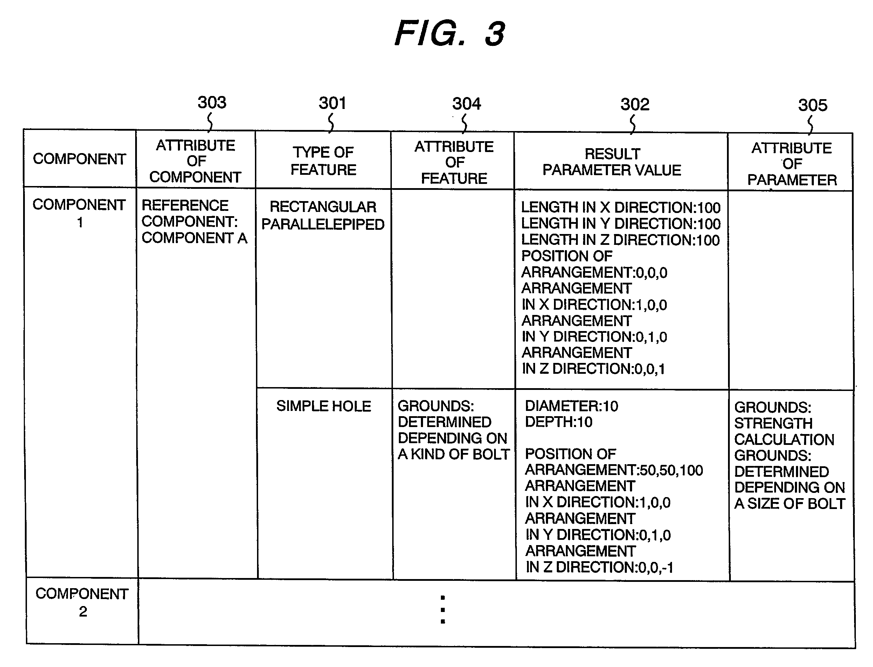

Fig. 3 shows an example of component data stored in a component storage means 106. The component data is formed at least of a type 301 of each feature constructing a component and a result parameter value 302 of each feature. A result parameter value includes a value to determine a size of shape and a value to determine position of arrangement or direction of a feature. In an example of the rectangular parallelepiped shown in Fig. 3, length in X direction, length in Y direction and length in Z direction are result parameter values for determining a size of shape, while position of arrangement, arrangement in X direction, arrangement in Y direction, arrangement in Z direction are result parameter values for determining position of arrangement or direction.

Moreover, it is also possible for the component data to include attribute of component 303, attribute of feature 304 and attribute of parameter 305. As a component attribute data, a result component, a written material or the like, for example, used as the reference are added. As a feature attribute data, the grounds for selection of a type of feature arranged, a result component used as the reference, a written material or the like, for example, is added. As a parameter attribute data, the grounds for determination of parameter, restriction of parameter considered or the like is added. It is assured that these attributes are completely inputted by a user in the interactive mode.

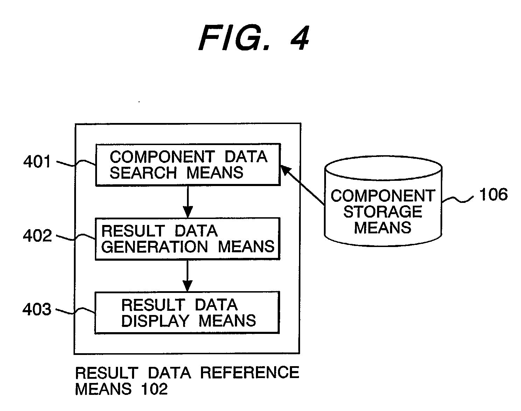

Fig. 4 shows an example of detail structure of the result data reference means 102. A component data search means 401 searches, from a component storage means 106, component data having a feature of the same type as that of the feature selected by the feature type selection means 101. A result data generation means 402 generates result data of feature from the component data searched by the component data search means 401. A result data display means 403 displays result data generated by the result data generation means 402.

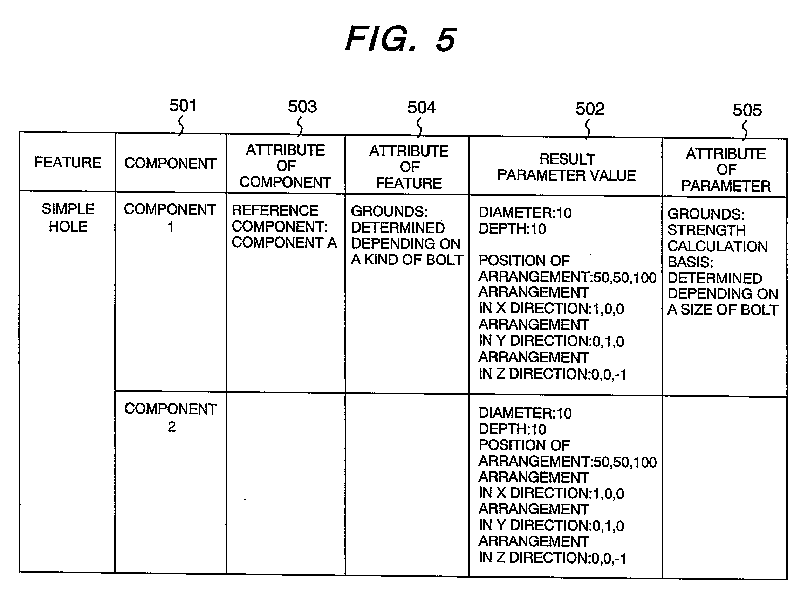

Fig. 5 shows an example of result data of feature generated by the result data generation means. Result data is formed, in regard to the feature searched from component data of Fig. 3, at least of a component 501 having such feature and a result parameter value 502. The result data may also have an attribute of component 503, an attribute of feature 504 and an attribute of parameter 505.

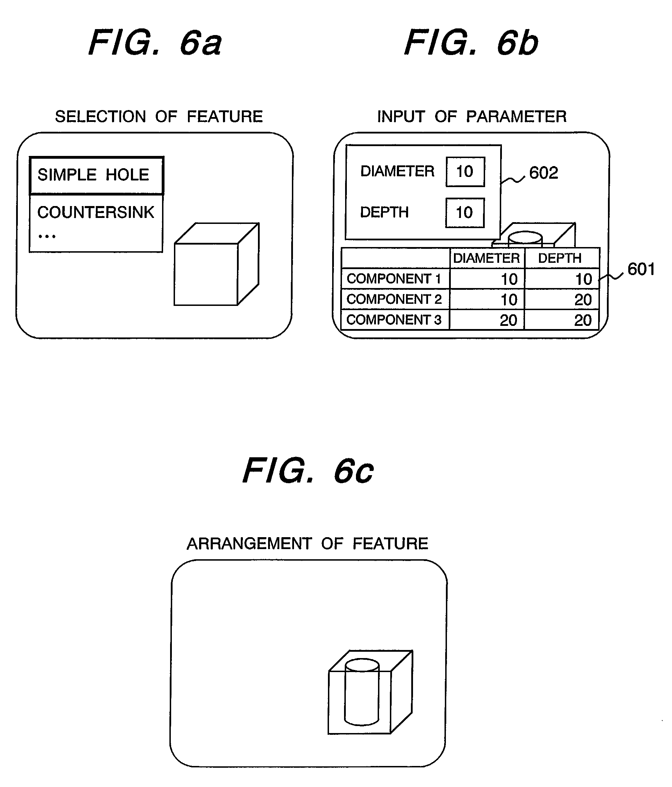

Figs. 6A, 6B, 6C show manipulation images by the apparatus of the present invention. Fig. 6A shows an image selected by the feature type selection means 101. Fig. 6B shows an image of parameter inputted by the parameter input means 103. A table 601 of result data displayed by the result data reference means 102 is also displayed together with a parameter input image 602. Here, a user inputs parameter values in the parameter input image 602 with reference to the table 601. In the table 601, only components and result parameter values are displayed but it is also possible to simultaneously display the component attribute, feature attribute and parameter attribute. Moreover, on the occasion of inputting a value identical to the result data of table 601, parameter values can be selected from the table. Fig. 6C is a diagram showing an arrangement of feature by the arrangement means 104.

According to this embodiment, the result parameters of the features of the same type among the those selected by the feature type selection means are searched from the component storage means and are then displayed, parameters can be inputted easily and thereby an investigation time can also be shortened.

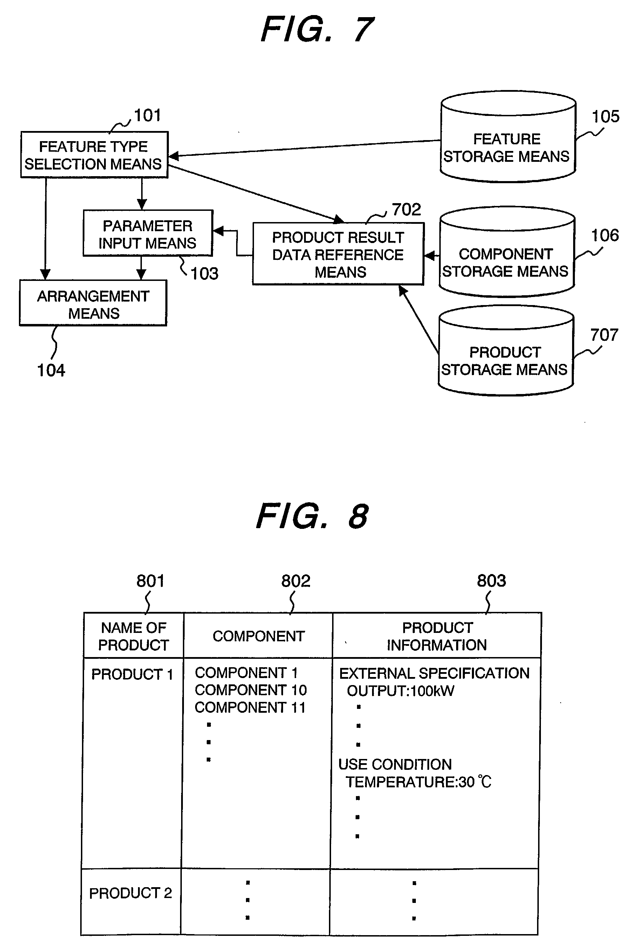

Fig. 7 shows an example of a second structure of the design support apparatus of the present invention. Only difference from Fig. 1 is that there are provided a product storage means 707 and a product result data reference means 702 substituted for the result data reference means. The other structure and operation are identical to that of Fig. 1.

A product result data reference means 702 searches, from the component storage means 106 and the product storage means 707, a component having the feature of the same kind as that selected by the feature type selection means 101 and a product data having the same component and displays the result data thereof. This structure enables reference to the parameters corresponding to a product information such as external specifications, application conditions and design know-how or the like.

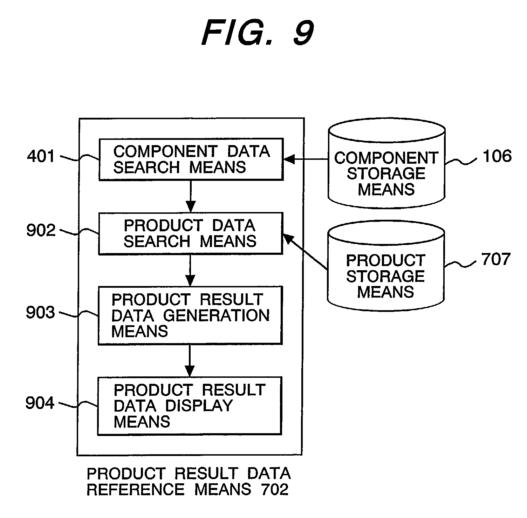

Fig. 8 shows an example of the product data stored in the product storage means 707. The product data includes at least a product name data 801 and moreover it can also include a product information 803 such as external specifications, application condition and design know-how or the like.

Fig. 9 shows an example of detail structure of the product result data reference means 702. The component data search means 401 searches, from the component storage means 106, component data having the feature of the same type as that selected by the feature type selection means 101. A product data search means 902 searches, from the product storage means 707, a product data having components searched by the component data search means 401. A product result data generation means 903 generates result data including a product data of feature from component data searched by the component data search means 401 and a product data searched by the product data search means 902. A product result data display means 904 displays result data generated by the product result data generation means 903.

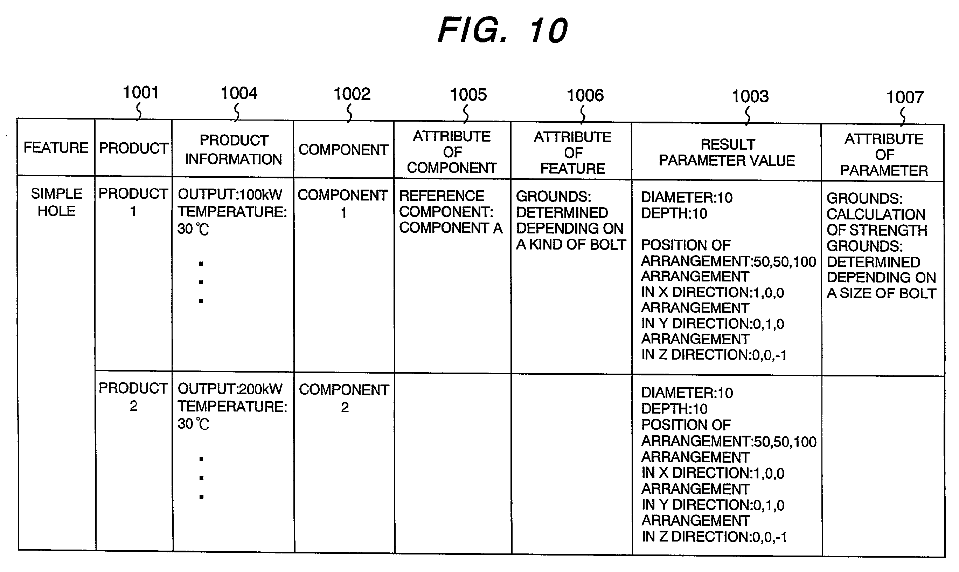

Fig. 10 shows an example of result data of a feature including a product data generated by the product result data generation means 903. This result data includes at least the data of product 1001, component 1002 and result parameter value 1003 and moreover it may include the data of product information 1004, attribute of component 1005, attribute of feature 1006 and attribute of parameter value 1007.

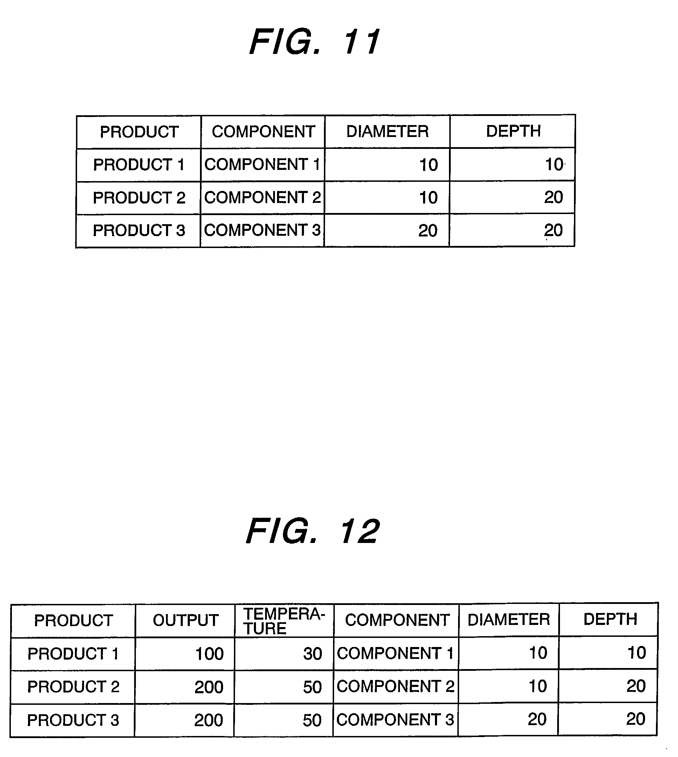

Fig. 11 and Fig. 12 show examples of tables displayed by the product result data display means 904. In these tables, at least the product, component and result parameter value are displayed. Fig. 11 displays product, component and result parameter value, while Fig. 12 displays moreover output as the product information and also temperature. Moreover, attributes of component, feature and parameter may also be displayed. These tables may be substituted for the table 601 of manipulation images of Fig. 6.

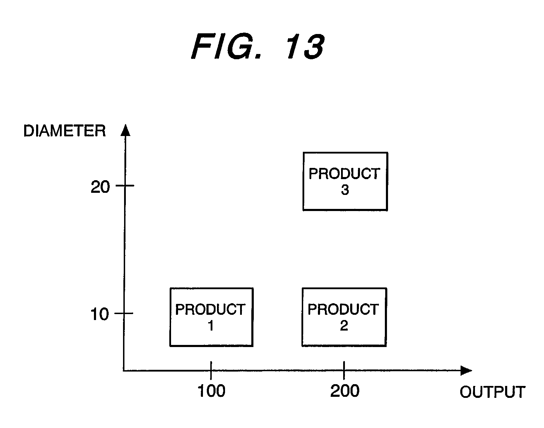

Fig. 13 shows an example of a graph displayed by the product data search means 902. In this example, an output as the product information is plotted on the horizontal axis, while a diameter as the parameter on the vertical axis. Here, it is assured that a user sets these horizontal and vertical axes. Moreover, display is also possible using three parameters of different colors. In addition, a character- string such as "Product 1" is used for display but this character-string may be substituted for a figure of product.
Relationship between a product and parameters can be recognized more intuitively by using the figure of product.

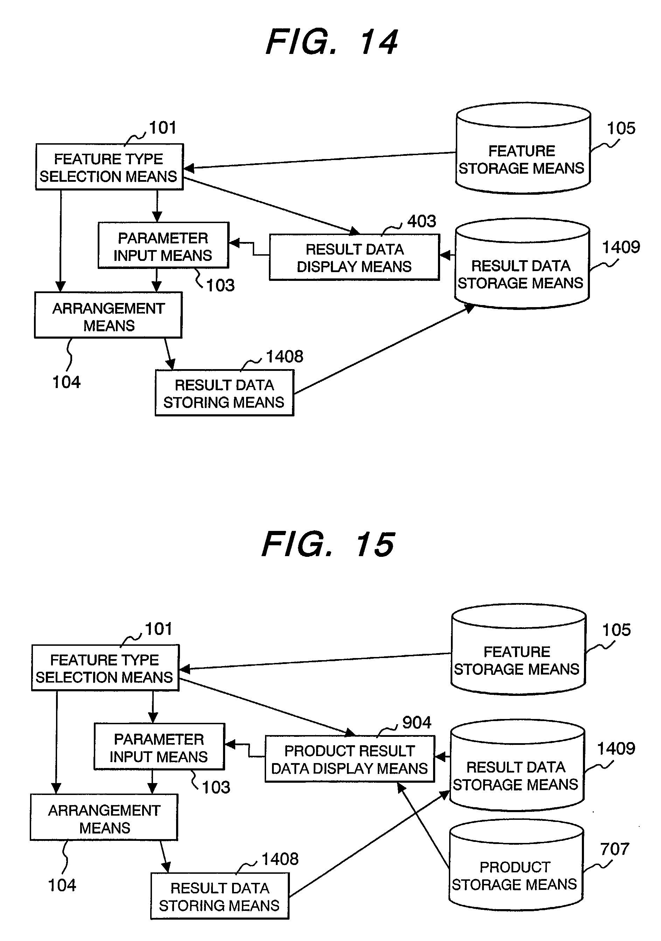

Fig. 14 shows a third example of structure of the design support apparatus of the present invention. This structure realizes result data in the structure of Fig. 1 in the other system. The feature type selection means 101 selects a feature to be arranged from the feature storage means. The result data display means 403 displays result data of the feature selected by the feature type selection means 101 from the result data storage means 1409. The parameter input means 103 inputs, with reference to the result data, the parameter of the feature selected by the feature type selection means 101. The arrangement means 104 arranges the feature selected by the feature type selection means 101 depending on the parameter inputted by the parameter input means 103. A result data storing means 1408 stores the result data of the feature arranged by the arrangement means 104 to the result data storage means 1409.

The result data can be searched faster than the search from the component storage means by storing the result data in units of features. The result data of the feature stored in the result data storage means 1490 shall be identical to the result data shown in Fig. 5.

Fig. 15 shows a fourth example of structure of the design support apparatus of the present invention. Only difference from Fig. 14 is that the product storage means 707 and the product result data display means 904 substituted for the result data display means are provided. Functions of this structure are identical to that of the other structure of Fig. 14.

The product result data display means 904 displays, from the result data storage means 1409 and product storage means 707, the result data of the feature selected by the feature type selection means together with the product data. The result data of the feature including the product information stored in the result data storage means 1409 shall be identical to the result data of Fig. 10. This structure enables reference to the parameters corresponding to the product information such as external specifications, application condition, design know-how or the like.

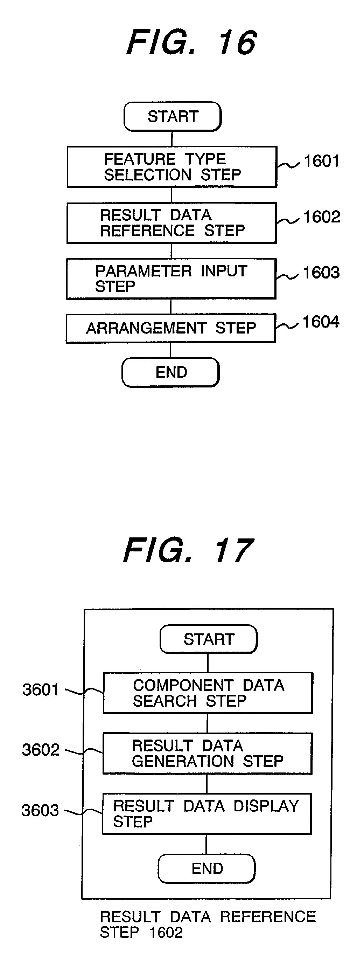

Fig. 16 shows a first example of structure of the design support method of the present invention. A feature type selection step 1601 selects a feature to be arranged from the feature selection means in which a feature data is stored. A result data reference step 1602 searches the result data of the feature selected by the feature type selection step 1601 from the component storage mans in which component data is stored and thereafter displays the searched result data. A parameter input step 1603 inputs parameters of the feature selected by the feature type selection step 1601 with reference to the result parameter. An arrangement step 1604 arranges the feature selected by the feature type selection step 1601 depending on the parameters inputted by the parameter input step 1603.

Fig. 17 shows a detail structure of the result data reference step 1602. A component data search step 3601 searches, from the component storage means, component data having the feature of the same type as that selected by the feature type selection step 1601. A result data generation step 3602 generates result data of the feature from the component data searched by the component data search step 3601. A result data display step 3603 displays the result data generated by the result data generation step 3602.

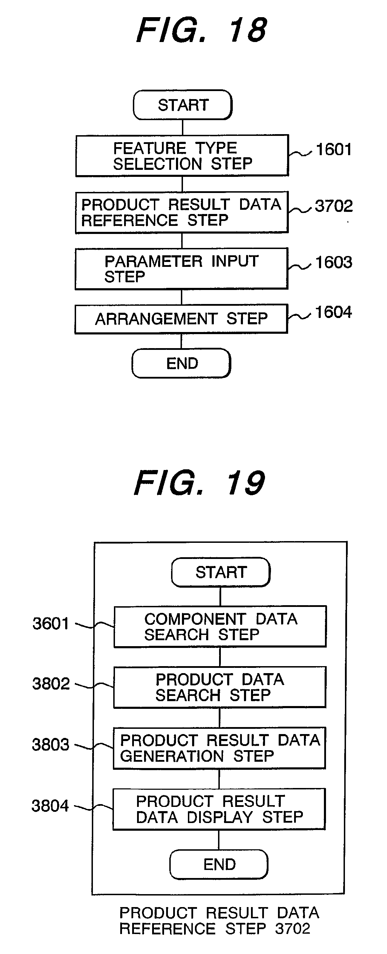

Fig. 18 shows a second example of structure of the design support method of the present invention. The step of the same contents as that of Fig. 16 is given the same step number. This condition is also adapted to a third and successive examples of structure.

The feature type selection step 1601 selects a feature to be arranged from the feature storage means in which features are stored. A product result data reference step 3702 displays result data of the feature selected by the feature type selection step 1601 from the component storage means for storing component data and the product storage means for storing product data. The parameter input step 1603 inputs he parameter of the feature selected by the feature type selection step 1601 with reference to the result data. The arrangement step 1604 arranges the feature selected by the feature type selection step 1601 depending on the parameter inputted by the parameter input step 1603.

Fig. 19 shows a detail structure of a product result data reference step 3702. The step same as that of Fig. 17 is given the same step number. This condition is also adapted to the third and successive examples of structure.

The product data search step 3601 searches, from the component storage means, component data having the feature of the same type as that selected by the feature type selection step 1601. A product data search step 3802 searches a product data having the component data searched by the component data search step 3801. A product result data generation step 3803 generates result data of the feature including a product information from the component data searched by the component data search step 3601 and the product data searched by the product data search step 3802. A product result data display step 3804 displays result data generated by the product result data generation step 3803.

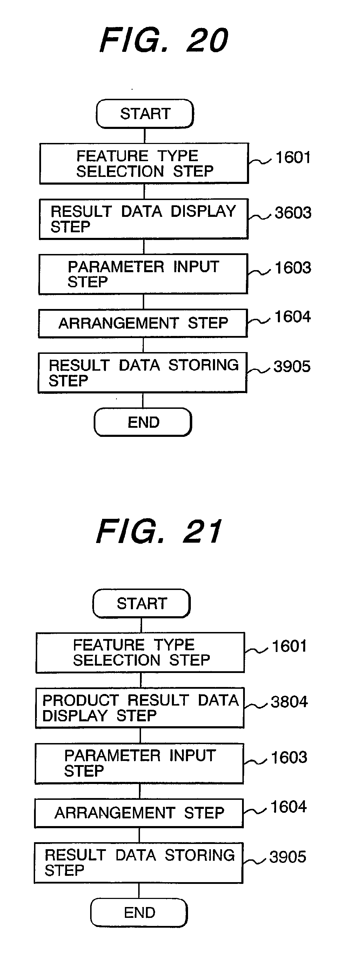

Fig. 20 shows a third example of structure of the design support method of the present invention. The feature type selection step 1601 selects a feature to be arranged from the feature storage means in which feature data are stored. The result data display step 3603 displays result data of the feature selected by the feature type selection step 101 from the result data storage means to which result data are stored. The parameter input step 1603 inputs parameters of the feature selected by the feature type selection step 1501 with reference to the result data. The arrangement step 1604 arranges the feature selected by the feature type selection step 1601 in accordance with the parameter inputted by the parameter input step 1603. A result data storing step 3905 stores result data of the feature arranged by the arrangement step 1604 to the result data storage means.

Fig. 21 shows a fourth example of structure of the design support method of the present invention. The feature type selection step 1601 selects a feature to be arranged from the feature storage means in which feature data are stored. The product result data display step 3804 displays result data of the feature selected by the feature type selection step 1601 including a product information from the result data storage means for storing the result data in units of features and the product storage means for storing the product data. The parameter input step 1603 inputs parameters of the feature selected by the feature type selection step 1601. The arrangement step 1604 arranges the feature selected by the feature type selection step 1601 depending on the parameters inputted by the parameter input step 1603. A result data storing step 3905 stores result data of the feature arranged by the arrangement step 1604 into the result data storage means.

The design support apparatus and method that enable selection of a type of feature and also realize reference to result data of the selected feature have been explained above. Next, a design support apparatus and a method that enable selection of a type of feature and also realize reference to result data of all similar features of the selected feature will then be explained below.

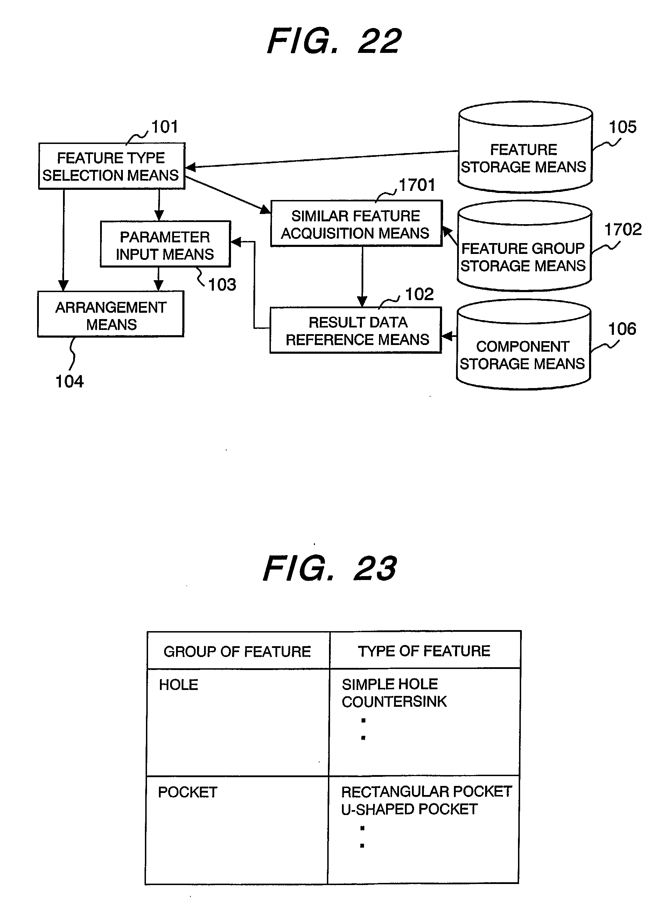

Fig. 22 shows a fifth example of structure of the design support apparatus of the present invention. The feature type selection means 101 selects a feature to be arranged from the feature storage means 105. A similar feature acquisition means 1701 acquires a similar feature of the feature selected by the feature type selection means 101 from a feature group storage means 1702. The result data reference means 102 searches component data including at least a similar feature acquired by the similar feature acquisition means 1701 and displays its result data. The parameter input means 103 inputs parameters of the feature selected by the feature type selection means 101 with reference to the result data. The arrangement means 104 arranges the feature selected by the feature type selection means 101 in accordance with the parameters inputted by the parameter input means 103.

Fig. 23 shows an example of a feature group data stored in the feature group storage means 1702. A "simple hole" and "counter-sink" or the like of the feature type belong to a feature group "hole". In the same manner, a "rectangular pocket" and "U-shape pocket" or the like of the feature type belong to a feature group "pocket". Here, the similar feature means the features belonging to the same group. Moreover, a feature group data shall be defined by a user. Otherwise, such feature group data shall be generated automatically by a system based on the name, shape or the like.

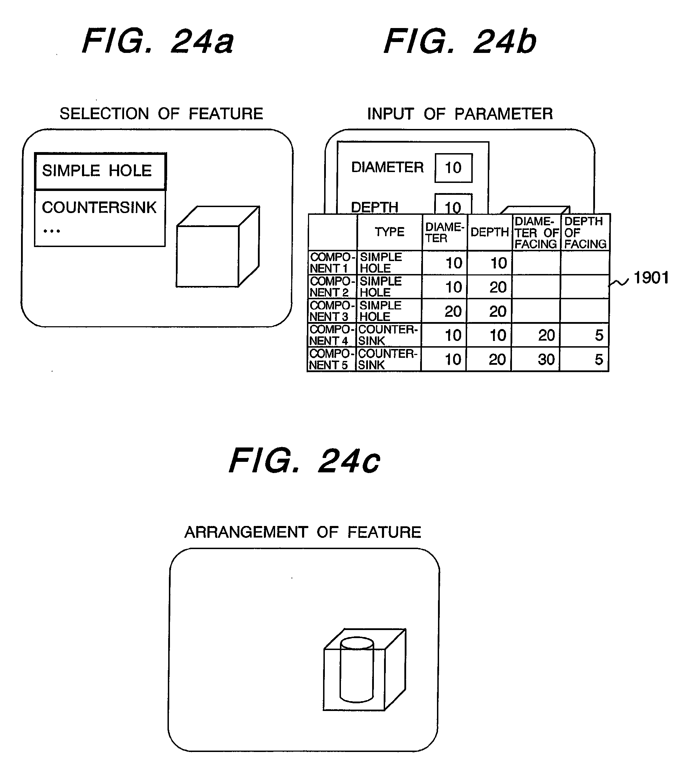

Figs. 24A, 24B, 24C show manipulation images of the design support apparatus of Fig. 22. Fig. 24A shows an image of the feature type selection means 101. Fig. 24B shows an image of the parameter input means 103. A table 1901 corresponds to the table displayed by the result data reference means 102. Result data of "counter-sink" as the similar feature is also displayed together with result data of "simple hole". In the Table 1901, only the component and result parameter value are displayed but it is also possible to simultaneously display attribute of component, attribute of feature and attribute of parameter. Moreover, in the case of inputting a value identical to the result data of the table 1901, a parameter value may be selected from the table. Fig. 24C shows a diagram in which a feature is arranged by the arrangement means 104.

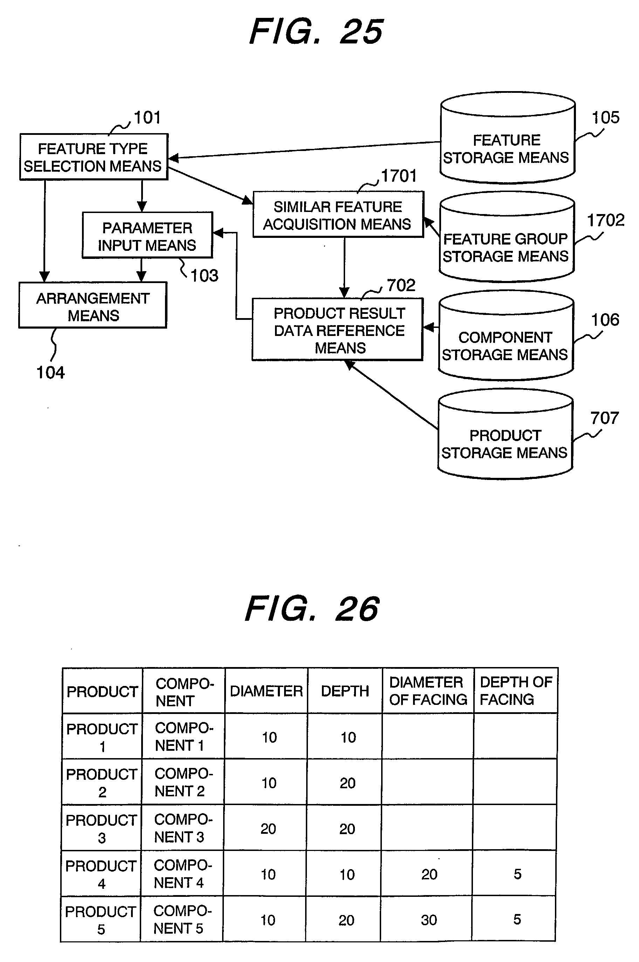

Fig. 25 shows a sixth example of structure of the design support apparatus of the present invention. Only difference from Fig. 22 is that the product storage means 707 and the product result data reference means 702 substituted for the result data reference means 102 are used. The other structure and functions are same as that of Fig. 22. The product result data reference means 702 searches, from the component storage means 106, component data having at least one similar feature obtained by the similar feature acquisition means 1701 and also searches a product data having such component from the product storage means 707 and thereby displays result data of the feature including the product information. The parameter input means 103 inputs parameters of the feature selected by the feature type selection means 101 with reference to the result data.

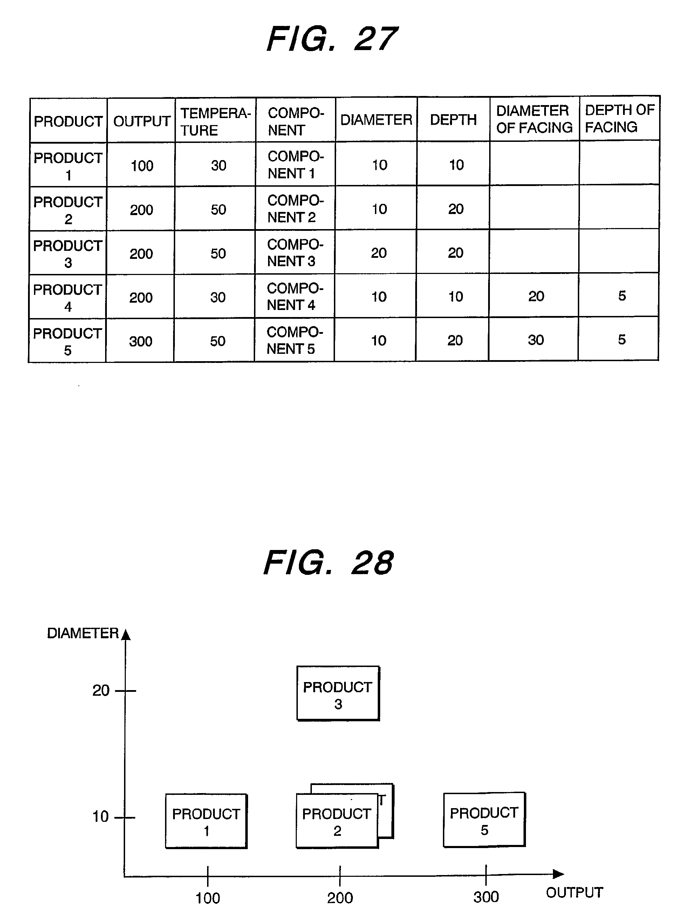

Fig. 26 and Fig. 27 show examples of tables generated by the product result data reference means 702. In Fig. 26, product, component, diameter, depth, diameter of counter-sink and depth of counter-sink which are result parameter values are listed. In Fig. 27, output and temperature which are product information pieces are additionally listed. Moreover, attribute of component, attribute of feature and attribute of parameter are also listed.

Fig. 28 shows an example of a graph which is displayed by the product result data reference means 702. In this example, output as the product information is plotted on the horizontal axis, while diameter as a parameter is plotted on the vertical axis. These horizontal axis and vertical axis shall be set by a user. Moreover, three parameters may also be used for display in different colors. In addition, a character string "Product 1" indicated in this example may be substituted for a figure of product.

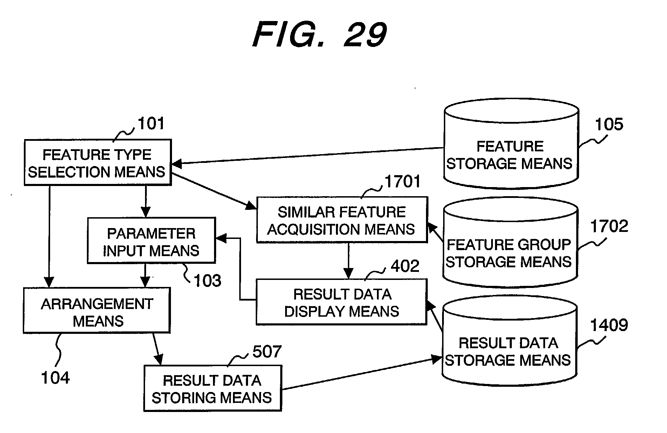

Fig. 29 shows a seventh example of structure of the design support apparatus of the present invention. Difference from Fig. 22 lies in the point that a result data storage means in which data used are accumulated is substituted for the component data storage means.

The feature type selection means 101 selects a feature to be arranged from the feature storage means 105. The similar feature acquisition means 1701 acquires, from the feature group storage means 1702, the similar feature of the feature selected by the feature type selection means 101. A result data display means 402 displays result data of each feature of the similar features obtained by the similar feature acquisition means 1701. The parameter input means 103 inputs parameters of the feature selected by the feature type selection means 101 with reference to the result data. The arrangement mans 104 arranges the feature selected by the feature type selection means 101 depending on the parameters inputted by the parameter input means 103. A result data storing means 507 stores result data of the feature arranged by the arrangement means 104 to the result data storage means 1409.

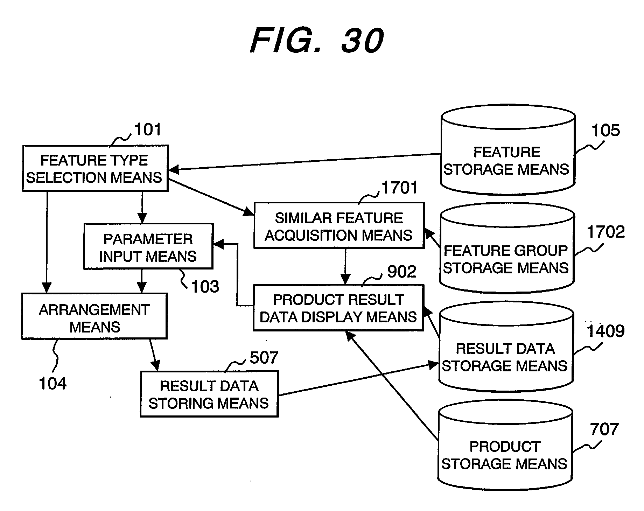

Fig. 30 shows an eighth example of structure of the design support apparatus of the present invention. Difference from Fig. 29 lies in the point that the product storage means 707 and a product result data display means in place of the result data display means are provided. The product result data display means 902 displays the result data of the similar features obtained by the similar feature acquisition means 1701 together with the product data from the result data storage means 1409 and the product storage means 707. Other structures and operations are similar to that of Fig. 29.

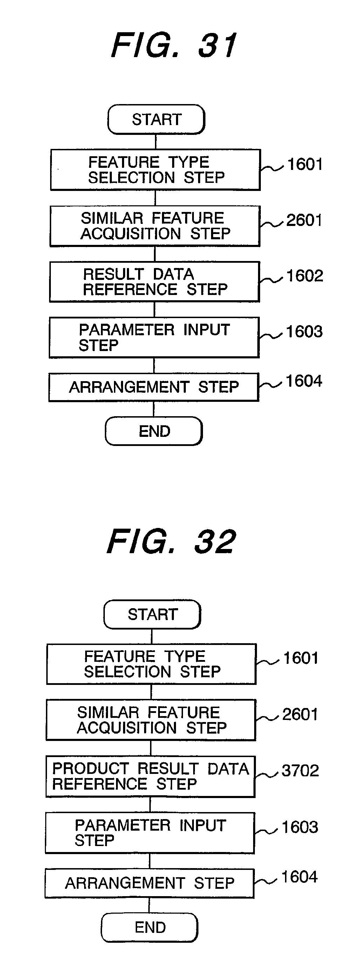

Fig. 31 shows a fifth example of structure of the design support method of the present invention. The feature type selection step 1601 selects a feature to be arranged from the feature storage means in which feature data are stored. A similar feature acquisition step 2601 obtains the similar features of the feature selected by the feature type selection step 1601 from the feature group storage means in which the feature group data is stored. The result data reference step 1602 searches component data having at least one similar feature obtained by the similar feature acquisition step 2601 from the component storage means for storing component data and displays the result data. The parameter input step 1603 inputs parameters of the feature selected by the feature type selection step 1601 with reference to the result data. The arrangement step 1604 arranges the feature selected by the feature type selection step 1601 depending on the parameters inputted by the parameter input step 1603.

Fig. 32 shows a sixth example of structure of the design support method of the present invention. Difference from Fig. 31 is that a product result data reference step 3702 is substituted for the result data reference step 1602. The product result data reference step 3702 displays, together with the product data, the result data of the similar feature obtained by the similar feature acquisition step 2601 from the component storage means for storing component data and the product storage means for storing product data. Others are similar to Fig. 31.

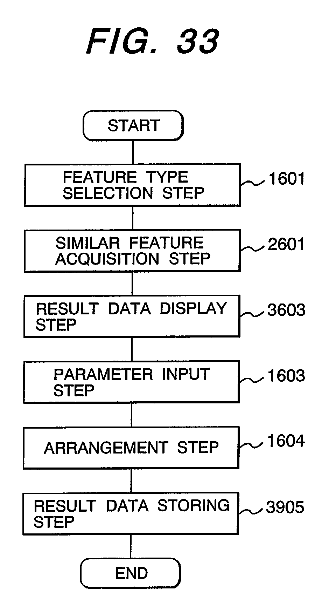

Fig. 33 shows a seventh example of structure of the design support method of the present invention. The feature type selection step 1601 selects a feature to be arranged from the feature storage means in which feature data are stored. The similar feature acquisition step 2601 obtains the similar features of the feature selected by the feature type selection step 1601 from the feature group storage means in which feature group data are stored.

A result data display step 3603 displays result data of the similar features obtained by the similar feature acquisition step 2601 from the result data storage means for storing result data in units of features. The parameter input step 1603 inputs the parameters of feature selected by the feature type selection step 1601 with reference to the result data. The arrangement step 1604 arranges the feature selected by the feature type selection step 1601 depending on the parameters inputted by the parameter input step 1603. A result data storing step 3905 stores result data of the feature arranged by the arrangement step 1604 to the result data storage means.

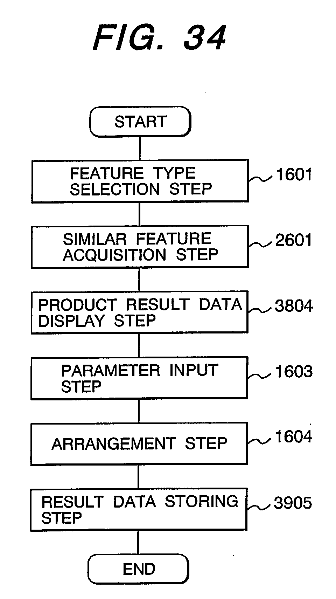

Fig. 34 shows an eighth example of structure of the design support method of the present invention. Difference from Fig. 33 is that a product result data display step 3804 is substituted for the result data display step 3603. The product result data display step 3804 displays, together with product data, result data of the similar features obtained by the similar feature acquisition step 2601 from the result data storage means for storing result data in units of features and the product storage means for storing product data. Others are similar to Fig. 33.

The design support apparatus and method which enable reference to the result data of all similar features of the feature by selecting a feature type have been explained above. Next, the design support apparatus and method which enable reference to the result data of all features included in a group by selecting the feature group will then be explained below.

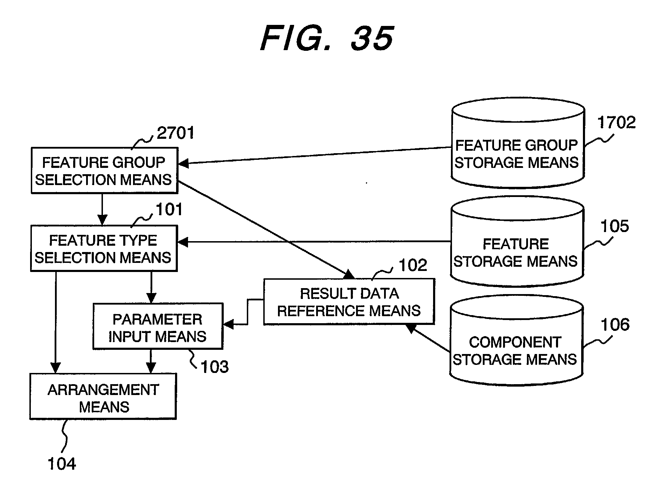

Fig. 35 shows a ninth example of structure of the design support apparatus of the present invention. A feature group selection means 2701 selects a feature group including a feature to be arranged from the feature group storage means 1702. The result data reference means 102 searches, from the component storage means 106, the component data having at least one feature included in the feature group selected by the feature group selection means 2701 and displays result data of such component data.

The feature type selection means 101 selects, from the feature data stored in the feature storage means, a feature to be arranged in the feature group selected by the feature group selection means 2701. The parameter input means 103 inputs parameters of the feature selected by the feature type selection means 101 with reference to the result data. The arrangement means 104 arranges the feature selected by the feature type selection means 101 depending on the parameters inputted by the parameter input means 103.

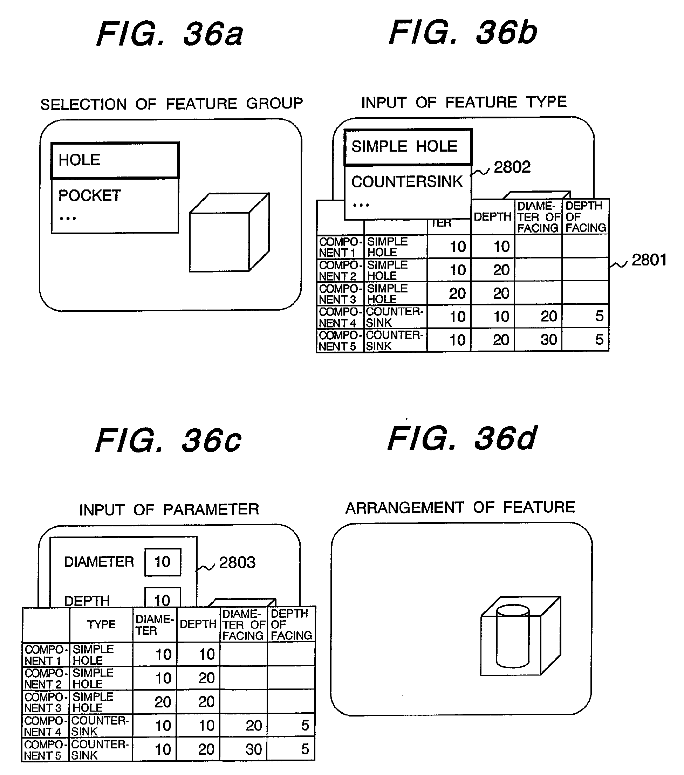

Figs. 36A, 36B, 36C; 36D show manipulation images of the design support apparatus shown in Fig. 35. Fig. 36A shows a display image of the feature group selection means 2701 in which "hole" is selected as the feature group. Fig. 36B is a display image of the feature type selection means 101. A table 2801 is displayed by the result data reference means 102. In this case, component, feature type and diameter, depth, depth of counter-sink, depth of counter-sink which are parameters are listed. Moreover, attribute of component, attribute of feature and attribute of parameter are also considered as the display object. In addition, in this example, a type of feature, namely "hole" in this case, is selected in a feature selection image 2802, but it is also possible to select a type of feature from the table 2801. Fig. 36C shows a display image of the parameter input means 103. The table 2801 is continuously displayed. In this example, parameters are inputted in the parameter input image 2803 but these parameters may also be selected from the table 2801. Fig. 36D shows an image in which a feature is arranged by the arrangement means 104.

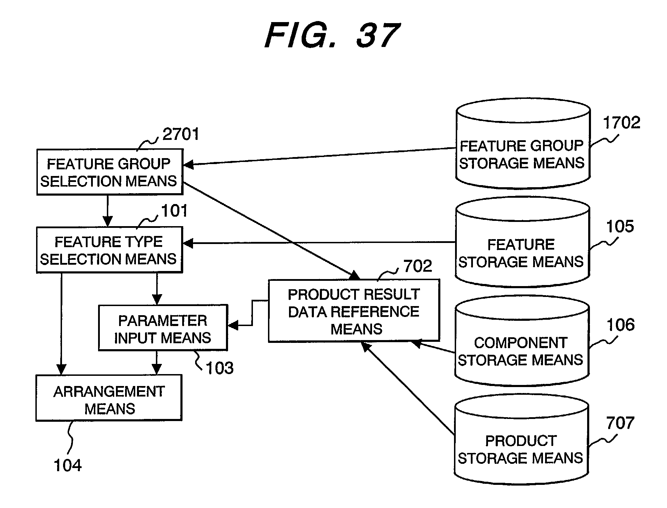

Fig. 37 shows a tenth example of structure of the design support apparatus of the present invention. Difference from Fig. 35 lies in that the product storage means 707 and the product result data reference means 702 substituted for the result data reference means 102 are used. The product result data reference means 702 searches, from the component storage means 106, component data having at least one feature included in the feature group selected by the feature group selection means 2701 and moreover displays the result data in units of features together with the product data by searching the product data having such component from the product storage means in which the product data is stored. Other structures are same as that of Fig. 35.

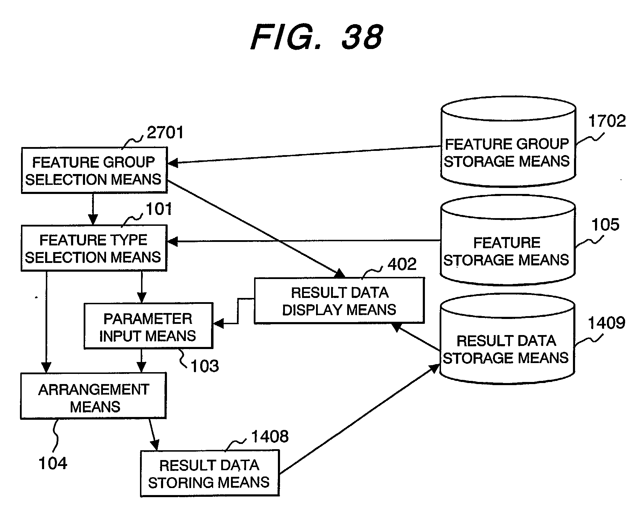

Fig. 38 is an eleventh example of structure of the design support apparatus of the present invention. Difference from Fig. 35 is that a result data storage means 1409 substituted for the component storage means 106.

The result data display means 402 displays the result data of each feature included in the feature group selected by the feature group selection means 2701 from the result data storage means 1409 in which the result data in units of features is stored. The feature type selection means 101 selects a feature to be arranged from the feature data stored in the feature storage means 105 among the feature group selected by the feature group selection means 2701. The parameter input means 103 inputs parameters of the feature selected by the feature type selection means 101 with reference to the result data. The arrangement means 104 arranges the feature selected by the feature type selection means 101 depending on the parameters inputted by the parameter input means 103. A result data storing means 1408 stores the result data of feature arranged by the arrangement means 104 to the result data storage means 1409.

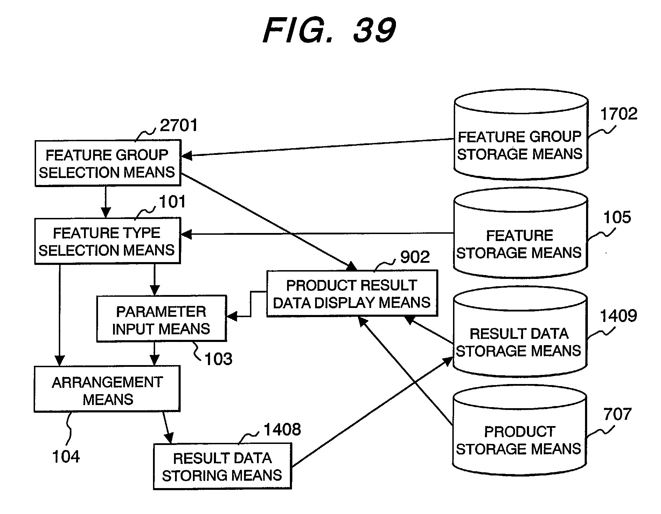

Fig. 39 shows a twelfth example of structure of the design support apparatus of the present invention. Difference from Fig. 38 is that the product storage means 707 and the product result data display means 902 substituted for the result data display means 402 are used. The product result data display means 902 displays, from the result data storage means 1409 in which the result data is stored in units of features and the product storage means 707 in which the product data is stored, the result data of each feature included in the feature group selected by the feature group selection means 2701 together with the product data. Other structures are same as that of Fig. 38.

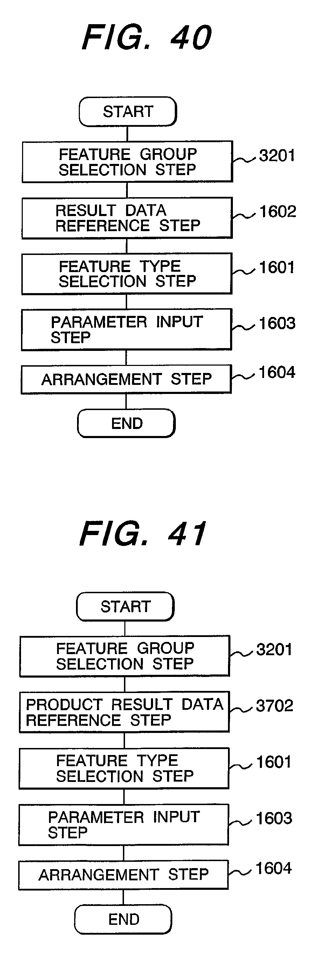

Fig. 40 shows a ninth example of structure of the design support method of the present invention. In comparison with the example of structure of Fig. 16, the feature group selection step is started first, followed next by the result data reference step.

A feature group selection step 3201 selects a feature group including the feature to be arranged from the feature group storage means in which the feature group data is stored. The result data reference step 1602 searches, from the component storage means, the component data having a feature of the same type as the feature included in the feature group selected by the feature group selection step 3201 and displays the result data. The feature type selection step 1601 selects a feature to be arranged from the feature included in the feature group selected by the feature group selection step. The parameter input step 1603 inputs parameters of the feature selected by the feature type selection step 1601 with reference to the result data. The arrangement step 1604 arranges the feature selected by the feature type selection step 1601 depending on the parameters inputted by the parameter input step 1603.

Fig. 41 shows a tenth example of structure of the design support method of the present invention. Difference from Fig. 40 the product result data reference step is substituted for the result data reference step 1602. The result data reference step 1602 searches, from the component storage means, the component data having the feature of the same type as the feature included in the feature group selected by the feature group selection step 3201 and displays, together with the product data, the result data of feature by searching the product data having the component searched from the product storage means . Others are processed in the same manner as Fig. 40.

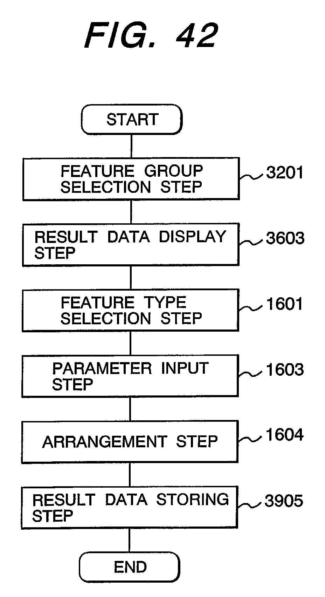

Fig. 42 shows an eleventh example of structure of the design support method of the present invention. Difference from Fig. 40 is that the result data display step 3603 is substituted for the reference data reference step 1602 and a result data storing step 3095 is added. The result data display step 3603 displays the result data of feature included in the feature group selected by the feature group selection step 3201 from the result data storage means in which the result data in units of features is stored. The result data storing step 3905 stores the result data of feature arranged by the arrangement step 1604 into the result data storage means . Other structures and operations are same as that of Fig. 40.

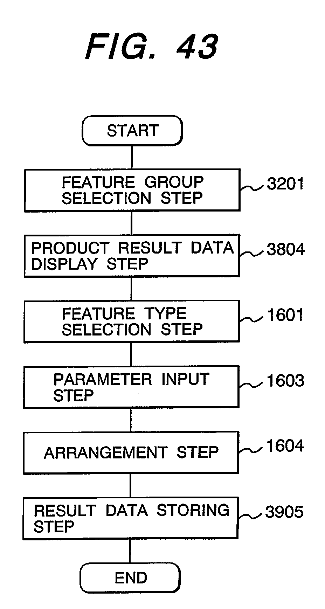

Fig. 43 shows a twelfth example of structure of the design support method of the present invention. Difference from Fig. 42 is that the product result data display step 3804 is substituted for the result data display step 3603. The product result data display step 3804 displays, from the result data storage means in which the result data is stored in units of features and the product data storage means in which the product data is stored, the result data of feature included in the feature group selected by the feature group selection step 3201 together with the product data. Other structures are same as that of Fig. 42.

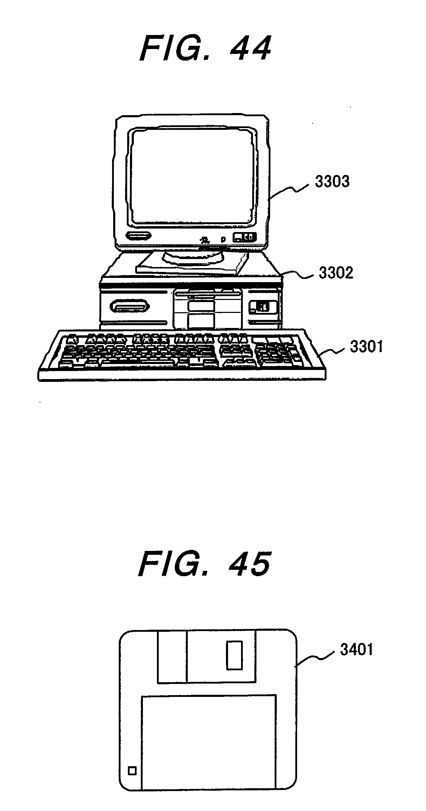

A plurality of functions for features have been explained independently, but these functions are actually executed in the form of combination thereof. Fig. 44 shows a practical structure of a design support apparatus. Namely, this design support apparatus may be realized with a general purpose computer system, composed of a computer main body 3302 including a keyboard 3301, an input means for inputting data and process program explained above, a storage for accumulating data and programs inputted and an arithmetic operation unit, and a display 3303 and the process programs executed by such hardware. In the apparatus of this embodiment, processes are basically executed in the sequence indicated by a flowchart shown in Fig. 16. This apparatus can also be formed as an exclusive apparatus.

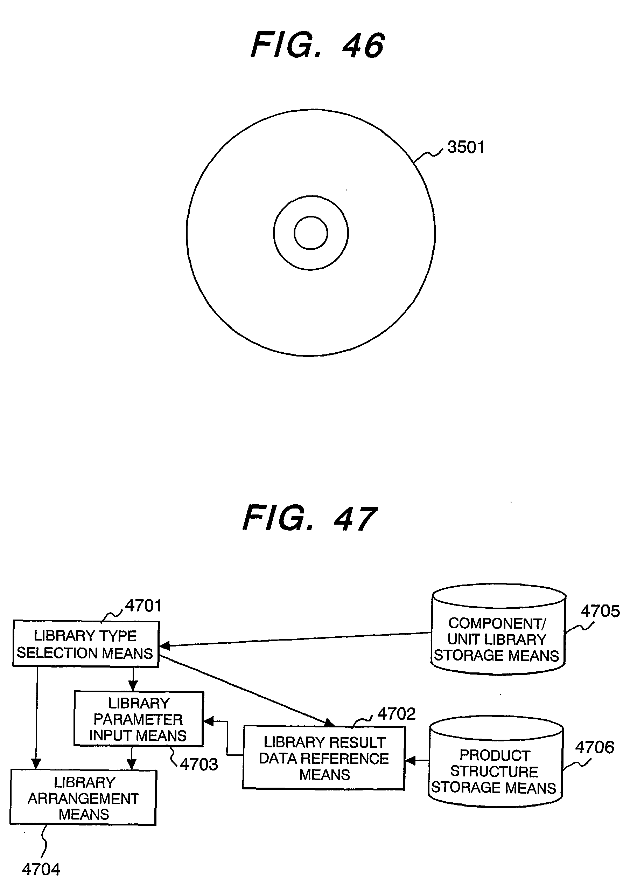

On the occasion of realizing a design support apparatus by adding process programs to a general purpose computer system, such process programs are recorded to a media such as a magnetic disc 3401 shown in Fig. 45 and a CD-ROM 3501 shown in Fig. 46 and are then distributed, stored and loaded. Such process programs are moreover read through a magnetic disc reader and CD-ROM reader provided in the computer main body 3302 for installation thereto.

In such a case that a process program distributed through a communication network is obtained with an input means to realize execution, such process program may be repeatedly used by storing the process program fetched into a medium such as a magnetic disc or the like.

The design support apparatus and method which enable reference to the result data for features have been explained above. Next, the design support apparatus and method which enable reference to the result data for libraries of component and unit are then explained. First, the design support apparatus and method which enable reference to the result data of the libraries of the same kind by selecting a type of component and unit library will be explained.

Fig. 47 shows a thirteenth example of structure of the design support apparatus of the present invention. A library type selection means 4701 selects a library to be arranged from library data stored in a component and unit library storage means 4705. A library result data reference means 4702 searches, from a product structure storage means 4706, component data having the library of the same type as the library selected by the library type selection means 4701 and displays result data thereof. A library parameter input means 4703 inputs parameters of the library selected by the library type selection means 4701 with reference to the result data. A library arrangement means 4704 arranges the library selected by the library type selection means 4701 depending on the parameters inputted by the library parameter input means 4703.

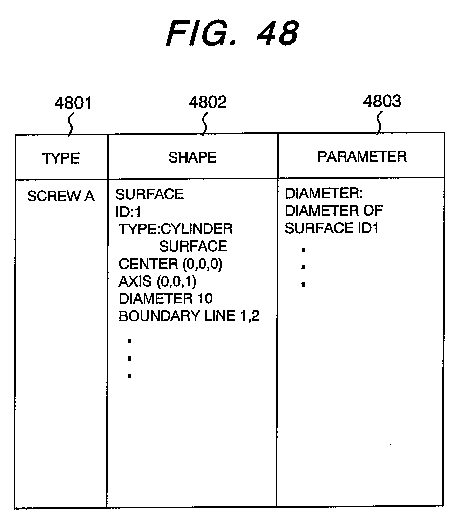

Fig. 48 shows an example of the library data stored in the component and unit library storage means 4705. The library data includes at least type 4801, shape information 4802 and parameter information 4803. The library parameters include one to determine a size of shape and the other to determine position and direction of arrangement of library. The parameter for determining position and direction of arrangement may be omitted because it does not depend on a type of library. A parameter shown in the figure determines a size of shape.

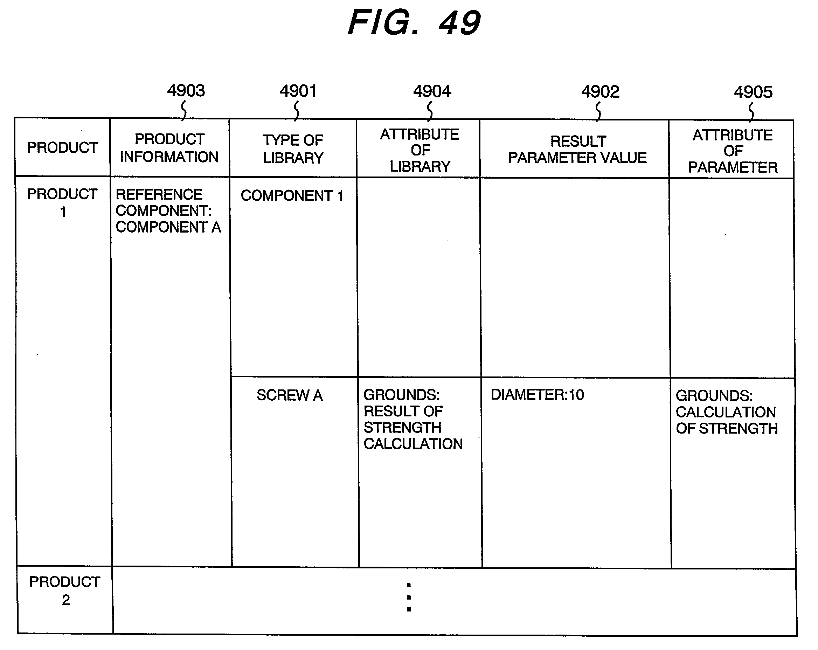

Fig. 49 shows an example of product structure data stored in the product structure storage means 4706. The product structure data is formed at least of a type of library 4901 constituting a product and a result parameter value 4902 of each library.

The result parameter value includes one to determine a size of shape and the other to determine position and direction of arrangement of library. In the example of a rectangular parallelepiped shown in Fig. 3, length in X direction, length in Y direction, length in Z direction are result parameter values to determine the sizes of shape, while position of arrangement, arrangement in X direction, arrangement in Y direction and arrangement in Z direction are result parameter values to determine position and direction of arrangement.

Moreover, the product structure data may include product information 4903, attribute of library 4904 and attribute of parameter 4905. As the product information, external specification such as output power or the like and operating condition such as temperature or the like, for example, are added. As an attribute data of library, grounds for selection of type of library arranged, result product used as the reference and a reference material or the like are added. As an attribute data of parameter, grounds for determining parameters and restriction of parameters considered or the like are added. Here, it is assumed that these attributes are inputted by a user through the interactive mode.

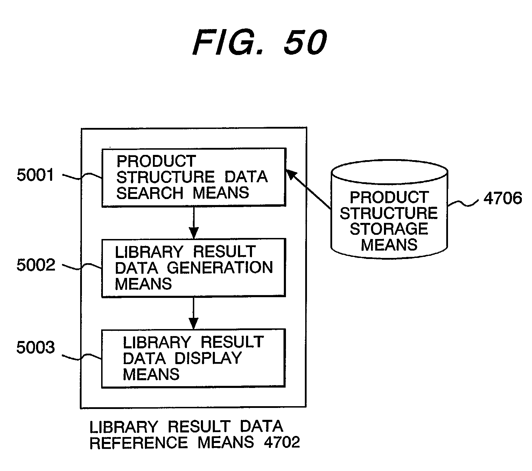

Fig. 50 shows a detail structure of the library result data reference means 4702. A product structure data search means 5001 searches, from the product structure storage means 4706, a product structure data having a library of the same type as the library selected by the library type selection means 4701. A library result data generation mans 5002 generates result data in unit of library from the product structure data searched by the product structure data search means 5001. A library result data display means 5003 displays result data generated by the library result data generation means 5002.

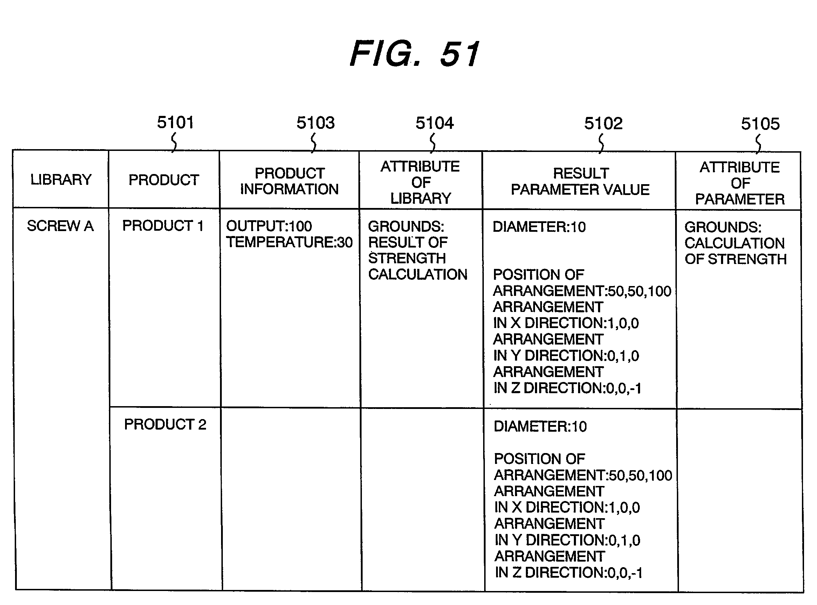

Fig. 51 shows an example of result data in unit of library generated by the library result data generation means 5002. This result data includes at least product 5101 having a library and result parameter value 510. Moreover, the result data can also include product information 1103, attribute of library 5104 and attribute of parameter 5105. In this figure, a product and a result parameter value or the like are displayed for a library of a crew A.

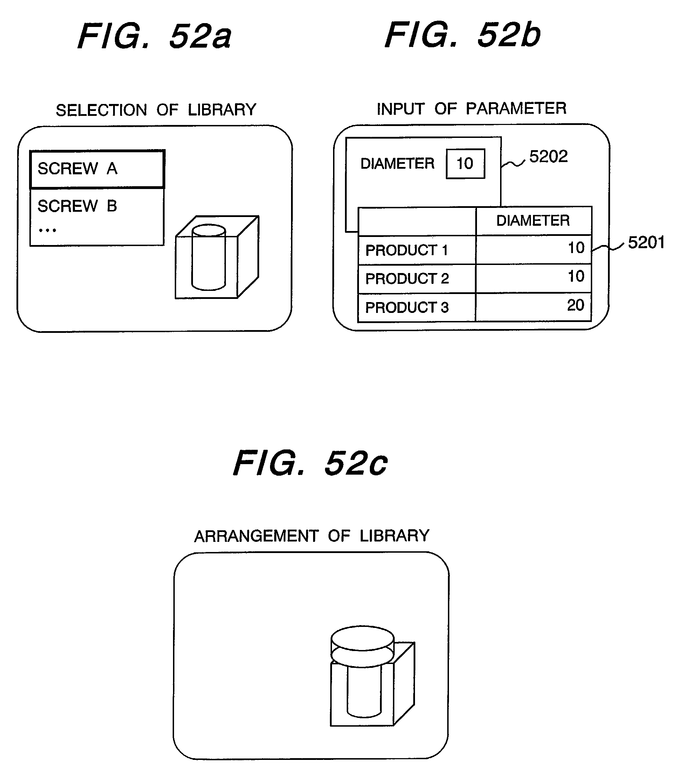

Figs. 52A, 52B, 52C show manipulation images by the thirteenth example of structure of the design support apparatus of the present invention. Fig. 52A shows a selection image of the library type selection means 4701. Fig. 52B shows a parameter input image of the library parameter input means 4703. A table 5201 of the result data displayed by the library result data reference means 4702 is displayed together with the parameter input image 5202. A user inputs here parameter values in the parameter input image 5202 with reference to the table 5201. In the table 5201, only the product and result parameter values are displayed but it is also possible to additionally display product information, attribute of library and attribute of parameter. Moreover, in the case of inputting the value same as the result data of Table 5201, parameter values may be selected from the table. Fig. 52C shows a library arranged by the library arrangement means 4704.

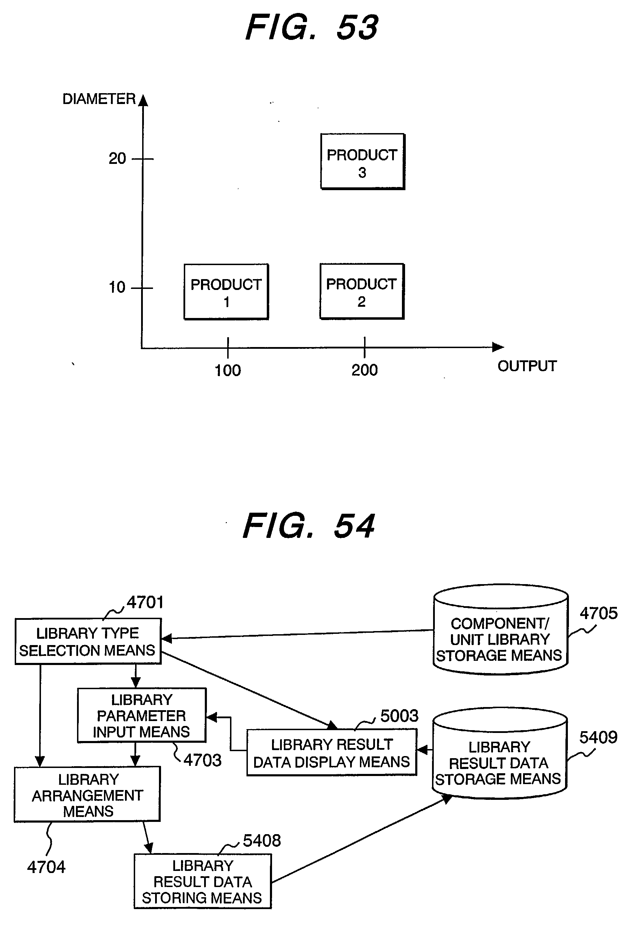

Fig. 53 shows an example of a graph displayed by the library result data reference means 4702. In this example, output as the product information is plotted on the horizontal axis, while diameter as a parameter on the vertical axis. These horizontal axis and vertical axis shall be set by a user. Moreover, three parameters in different colors may also be used for display. Moreover, a product may also be displayed in place of a character string of "Product I". A relationship between product and parameter can be recognized more intuitively by using a figure of product.

Fig. 54 shows a fourteenth example of structure of the design support apparatus of the present invention. Difference from Fig. 47 is that a library result data storage means 5409 is substituted for the component structure storage means 4706.

The library type selection means 4701 selects the library to be arranged from the component and unit library storage mans 4705. A library result data display means 5003 displays, from the library result data storage means 5409, result data in unit of library selected by the library type selection means 4701. The library parameter input means 4703 inputs parameters of the library selected by the library type selection means 4701 with reference to the result data.

The library arrangement means 4704 arranges a library selected by the library type selection means 4701 depending on the parameters inputted by the library parameter input means 4703. A library parameter storing step 5408 stores result data of the library arranged by the library arrangement means 4704 to the library result data storage means 5409. The result data in unit of library stored in the library result data storage means 5409 is identical to the data shown in Fig. 51.

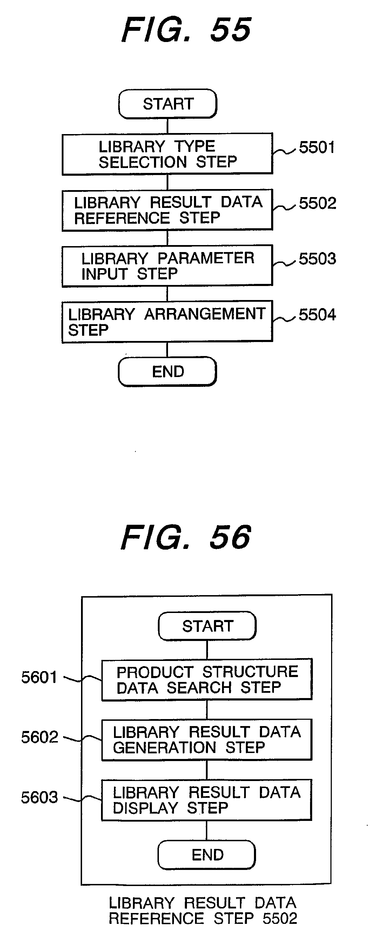

Fig. 55 shows a thirteenth example of structure of the design support method of the present invention. Basically, this flow is same as that for the feature shown in Fig. 16.

A library type selection step 5501 selects a library to be arranged from the library storage means in which library data is stored. A library result data reference step 5502 searches result data of the library selected by the library type selection step 5501 from the product structure storage means in which the product structure data is stored and thereafter displays this result data. A library parameter input step 5503 inputs parameters of the library selected by the library type selection step 5501 with reference to the result data. A library arrangement step 5504 arranges the library selected by the library type selection step 5501 depending on the parameters inputted by the library parameter input step 5503.

The result data reference step 5502 has a structure, for example, shown in Fig. 56. A product structure data search step 5601 searches, from the product structure storage mans 4706, a product structure data having the library of the same type as the library selected by the library type selection step 5501. A library result data generation step 5602 generates result data in unit of library from the product structure data searched by the product structure data search step 5601. A library result data display step 5603 displays the result data generated by the result data generation step 5602.

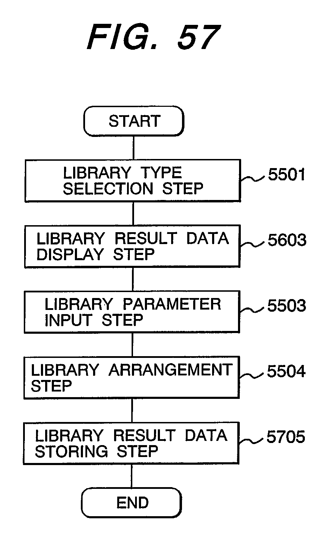

Fig. 57 shows a fourteenth example of structure of the design support method of the present invention. Difference from Fig. 55 is characterized in that a library data is displayed in direct and stored.

The library type selection step 5501 selects a library to be arranged from the library storage means in which library data is stored. The library result data display step 5603 displays the result data of library selected by the library type selection step 5501. The library parameter input step 5503 inputs parameters of the library selected by the library type selection step 5501 with reference to the result data. The library arrangement step 5504 arranges the library selected by the library type selection step 5501 depending on the parameters inputted by the library parameter input step 5503. A library result data storing step 5705 stores the result data of the library arranged by the library arrangement step 5504 into the result data storage means .

The design support apparatus and method which enable reference to the result data of the libraries of the same kind by selecting the component and unit library type have been explained above. Thereafter, the design support apparatus and method which enable reference to the result data including the similar libraries by selecting the component and unit library type will then be explained below.

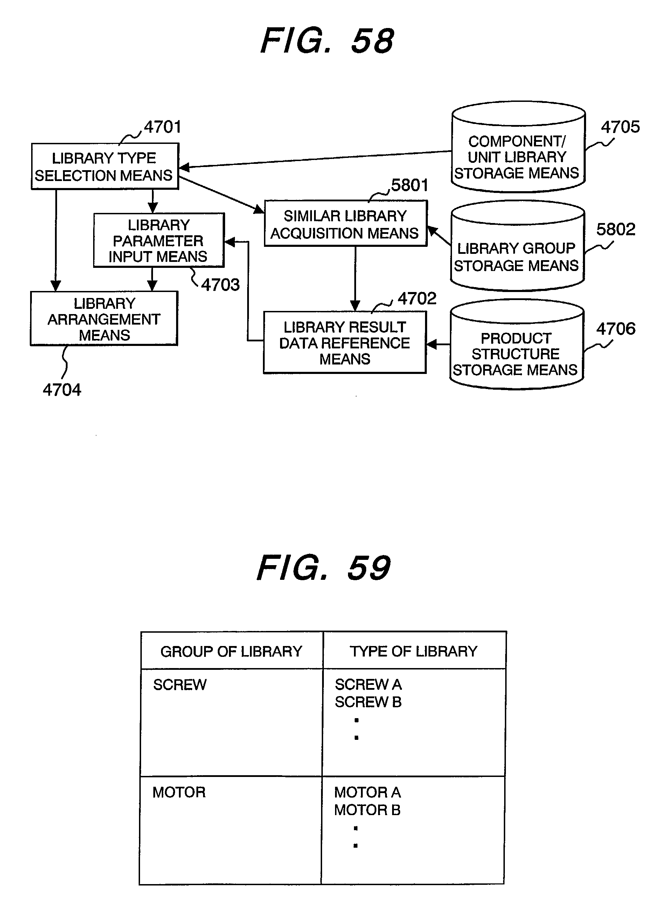

Fig. 58 shows a fifteenth example of structure of the design support apparatus of the present invention. The library selection means 4701 selects a library to be arranged from the component and unit library storage means 4705. A similar library acquisition means 5801 acquires similar libraries of the library selected by the library type selection means 4701. The library result data reference means 4702 searches the product structure data including at least one of the similar libraries acquired by the similar library acquisition means 5801 from the product structure storage means 4706 and displays the result data thereof.

The library parameter input means 4703 inputs parameters of the library selected by the library type selection means 4701 with reference to the result data. The library arrangement means 4704 arranges a library selected by the library type selection means 4701 depending on the parameters inputted by the library parameter input means 4703.

Fig. 59 shows an example of a library group data stored in a library group storage means 5802. The types of library "screw A" and "screw B" or the like belong to the library group "Screw" . In the same manner, types of library "Motor A" and "Motor B" belong to the library group "Motor". The similar library means a library belonging to the same group. The library group shall beset by a user. Or, it is also possible that the library group is automatically generated by a system depending on the name or shape or the like.

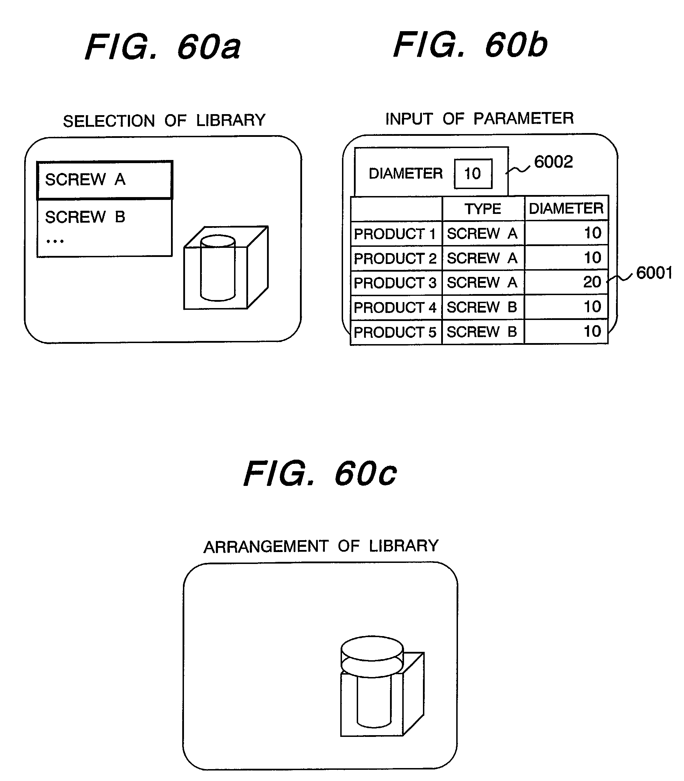

Figs. 60A, 60B and 60C show manipulation images of the design support apparatus shown in Fig. 58. Fig. 60A shows an image of the library type selection means 4701. Fig. 60B shows an image of the library parameter input means 4703. A table 6001 is displayed by the library result data reference means 4702. Result data of the "Screw B" as the similar library is displayed together with the result data of the selected "Screw A". In the Table 6001, only the product and result parameter value are displayed, but it is also possible to display the product information, attribute of library and attribute of parameter. Moreover, in the case of inputting a value same as the result data of the Table 1901, the parameter values can be selected from the Table 6001. Fig. 60C shows a library arranged by the library arrangement means 4704.

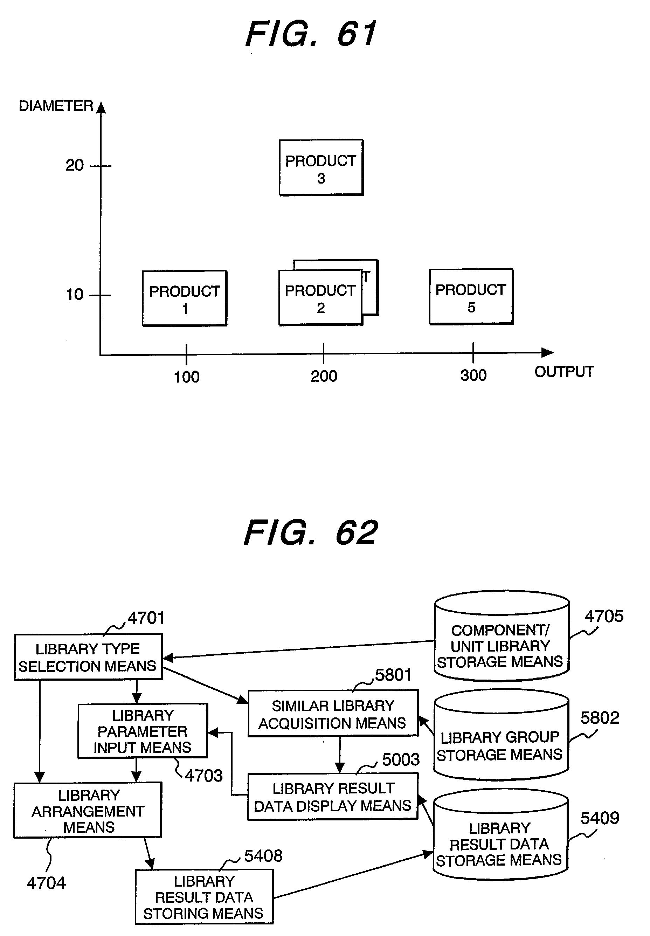

Fig. 61 shows an example of a graph displayed by the library result data reference means 4702. In this example, output as the product information is plotted on the horizontal axis, while diameter as parameter on the vertical axis. These horizontal axis and vertical axis can be set by a user. Moreover, it is also possible to realize display with three parameters in different colors. Moreover, in this figure, a figure of product may be displayed in place of the character string of "Product 1".

Fig. 62 shows a sixteenth example of structure of the design support apparatus of the present invention. This structure is characterized in that similar libraries are obtained and the result data thereof are displayed.

The library type selection means 4701 selects a library arranged from the component and unit library storage means 4705. The similar library acquisition means 5801 obtains the similar library selected by the library type selection means 4701 from the library group storage means 5802. A library result data display means 5003 displays, from the library result data storage means 5409, result data of each library of the similar libraries obtained by the similar library acquisition means 5801.

The library parameter input means 4703 inputs parameters of the library selected by the library type selection means 4701 with reference to the result data. The library arrangement means 4704 arranges the library selected by the library type selection means 4701 depending on the parameters inputted by the library parameter input means 4703. The library result data storing means 5408 stores the result data of library arranged by the library arrangement means 4704 to the library result data storage means 5409.

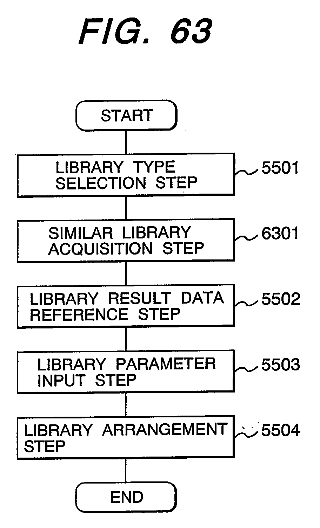

Fig. 63 shows a fifteenth example of structure of the design support method of the present invention. The library type selection step 5501 selects a library to be arranged from the storage means in which the library data is stored. A similar library acquisition step 6301 obtains, from the library group storage means in which the library group data is stored, the similar library of the library selected by the library type selection step 5501. The library result data reference step 5502 searches the product structure data having at least one similar library obtained by the similar library acquisition step 6301 from the product structure storage means in which the product structure data is stored and thereafter displays the result data thereof.

The library parameter input step 5503 inputs parameters of the library selected by the library type selection step 5501 with reference to the result data. The library arrangement step 5504 arranges the library selected by the library type selection step 5501 depending on the parameters inputted by the library parameter input step 5503.

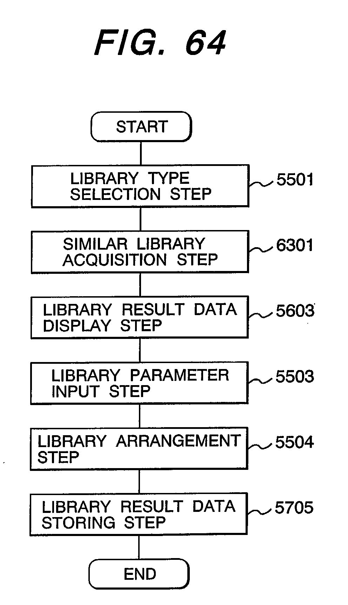

Fig. 64 shows a sixteenth example of structure of the design support method of the present invention. Difference from Fig. 63 is that the library result data is displayed in direct and stored.

The library type selection step 5501 selects the library to be arranged from the library storage means in which the library data is stored. The similar library acquisition step 6301 acquires the similar library of the library selected by the library type selection step 5501 from the library group storage means in which the library group data is stored. The library result data display step 5603 displays, from the result data storage means for storing the result data in unit of library, the result data of the similar library obtained by the similar library acquisition step 6301.

The library parameter input step 5503 inputs parameters of the library selected by the library type selection step 5501 with reference to the result data. The library arrangement step 5504 arranges the library selected by the library type selection step 5501 depending on the parameters inputted to the library parameter input step 5503. The library result data storing step 5705 stores the result data of the library arranged by the library arrangement step 5504 to the result data storage means.

The design support apparatus and method which enable reference to the result data including the similar library by selecting the component and unit library type have been explained above. Next, the design apparatus and method which enable reference to the result data of all libraries included in the selected group by selecting the component and unit library group will then be explained below.

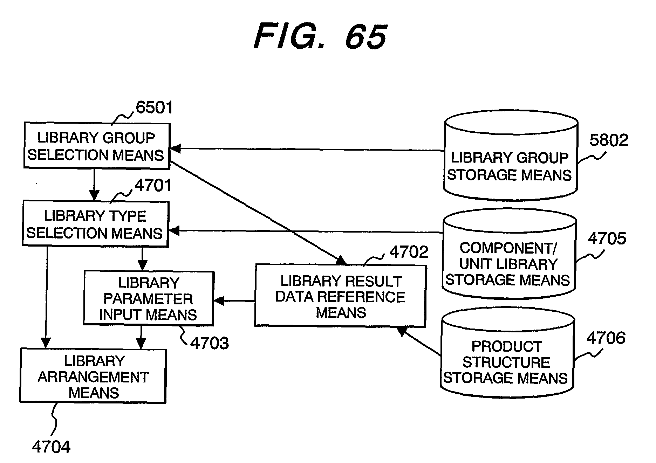

Fig. 65 shows a seventeenth example of structure of the design support apparatus of the present invention. A library group selection means 6501 selects a library group including the library to be arranged from the library group storage means 5802. The library result data reference means 4702 searches, from the product structure storage means 4706, the product structure data having at least one library included in the library group selected by the library group selection means 6501 and then displays the result data thereof. The library type selection means 4701 selects the library to be arranged from the library group selected by the library group selection means 6501 and the library data stored in the component and unit library storage means 4705. The library parameter input means 4703 inputs parameters of the library selected by the library type selection means 4701 with reference to the result data. The library arrangement means 4704 arranges the library selected by the library type selection means 4701 depending on the parameters inputted by the library parameter input means 4703.

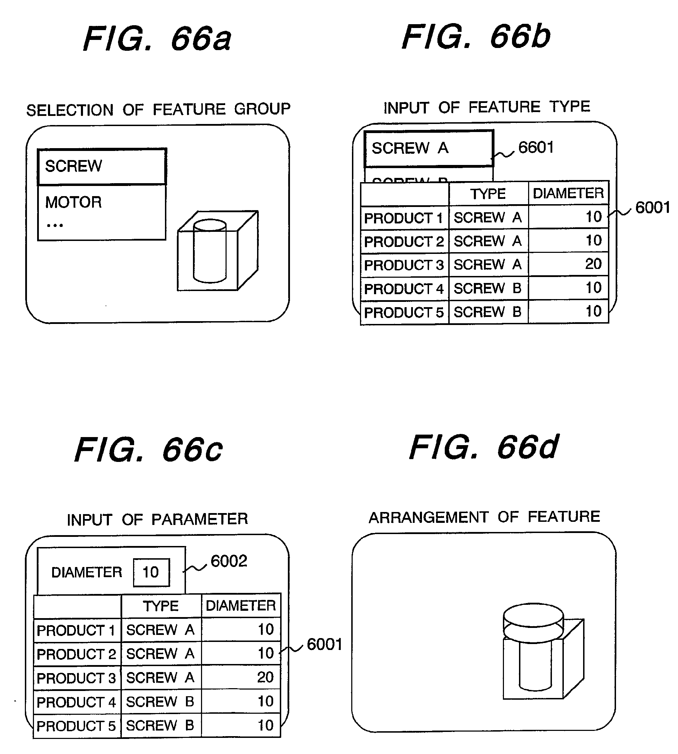

Figs. 66A, 66B, 66C, 66D show manipulation images of the design support apparatus shown in Fig. 65. Fig. 66A shows an image of the library group selection means 6501. Fig. 66B is an image of the library type selection means 4701. A table 6001 is displayed by the library result data reference means 4702. In this case, product, type of library and diameter as parameter are considered as the display objects. Moreover, in this example, a type of library is selected in the library selection image 6601, but it is also possible to select the type of library from the table. Fig. 66C is an image of the library parameter input means 4703. The table 6001 is continuously displayed. In this example, a parameter is inputted in a parameter input image 6002 but the parameters may be selected from the table 6001. Fig. 66D shows a library arranged by the library arrangement means 4704.

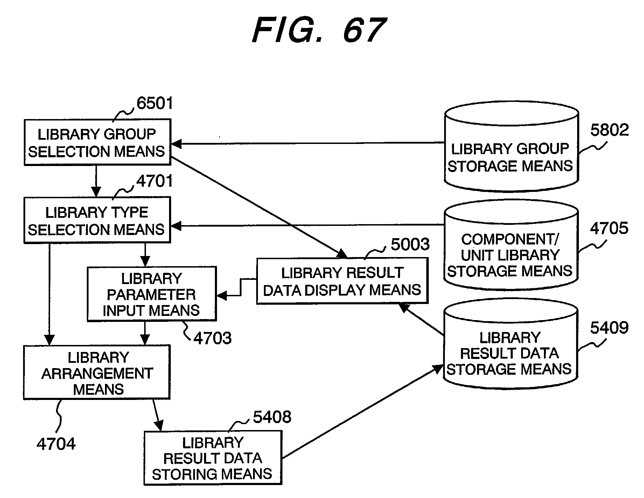

Fig. 67 shows an eighteenth example of structure of the design support apparatus of the present invention. Difference from Fig. 65 is that the product structure storage means 4706, the library result data storage means 5409 substituted for the library result data reference means 4702 and the library result data display means 5003 are provided and moreover the library result data storing means is additionally provided.

The library result data display means 5002 displays, from the library result data storage means 5409 in which the result data in unit of library is stored, the result data of each library included in the library group selected by the library group selection means 6501. The library result data storing means 1408 stores the result data of the library arranged by the library arrangement means 4704 to the library result data storing means 5409. Other structures and operations are same as that of Fig. 65.

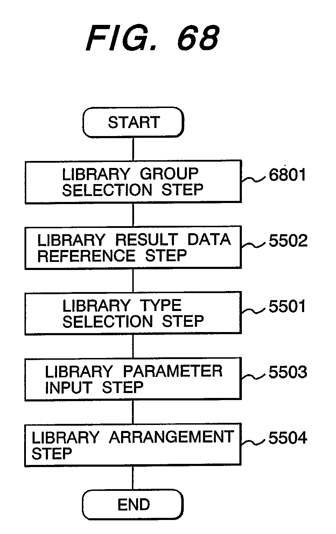

Fig. 68 shows a seventeenth example of structure of the design support method of the present invention shown in Fig. 65.

A library group selection step 6801 selects, from the library group storage means in which the library group data is stored, the library group including the library to be arranged. The library result data reference step 5502 searches, from the product structure storage means, the product structure data having the library of the same type as the library included in the library group selected by the library group selection step 6801 and thereafter displays the result data thereof . The library type selection step 5501 selects the library to be arranged from the library belonging to the library group selected by the library group selection step 6801.

The library parameter input step 5503 inputs parameters of the library selected by the library type selection step 5501 with reference to the result data. The library arrangement step 5504 arranges the library selected by the library type selection step 5501 depending on the parameters inputted by the library parameter input step 5503.

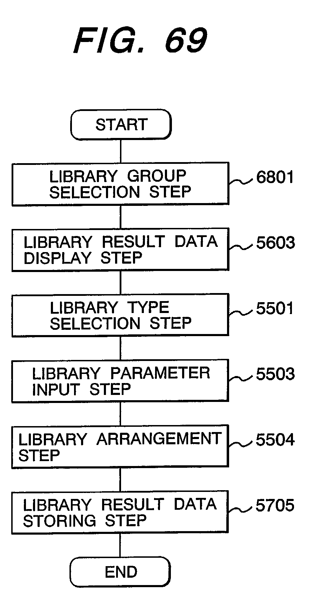

Fig. 69 shows an eighteenth example of structure of the design support method of the present invention shown in Fig. 67. Difference from Fig. 68 is that the library result data is displayed in direct and stored.

The library result data display step 5603 displays, from the result data storage means in which the result data in unit of library is stored, the result data of the library included in the library group selected by the library group selection step 6801. The library result data storing step 5705 stores the result data of the library arranged by the library arrangement step 5504 to the result data storage means. Other structures and operations are same as that of Fig. 68.

Various functions have been explained individually and these functions can be realized with a general purpose computer system shown in Fig. 44 and a process program executed by such hardware.

The processes by this system for the features and libraries explained above can be realized with the program which have been explained based on the flowcharts. Moreover, this program can be distributed with a storage medium such as CD-ROM or the like or via a network from a processor having the function to transmit the relevant program.

According to the present invention, there is provided an effect that the time required for investigation of type of feature, type of library and parameters thereof can be reduced by displaying the result data in the form of a list.

## Claims

1. A design support apparatus for combining features, each of which is a unit of various shapes, on a display image for the design purpose, comprising:
a feature storage means (105) for storing feature data, a feature type selection means (101) for selecting features to be arranged from said feature storage means (105);
a parameter input means (103) for inputting parameters of features selected by said feature type selection means (101) with reference to result data;
an arrangement means (104) for arranging and displaying the features selected by said feature type selection means (101) depending on parameters inputted by said parameter input means (103);
a component storage means (106) for storing a type of feature and a result parameter thereof of each component; and
a result data reference means (102; 702) for searching component data having the feature of the same kind as the feature selected by the feature type selection means (101) from said component storage means (106) and for displaying said component data as said result data.

2. A design support apparatus according to claim 1, further comprising a product storage means (707) for storing product data such as external specifications,
application conditions and know-how, wherein said result data reference means (702) searches result data for the feature selected by said feature type selection means together with a product information from said product data.

3. A design support apparatus for combining features, each of which is a unit of various shapes, on a display image for design, comprising:
a feature storage means (105) for storing feature data;
a feature type selection means (101) for selecting features to be arranged from said feature storage means (105);
a parameter input means (103) for inputting parameters of the feature selected by said feature type selection means (101) with reference to result data;
an arrangement means (104) for arranging and displaying a feature selected by said feature type selection means (101) depending on parameters inputted by said parameter input means;
a result data storage means (1409) for storing result data including result parameters and name of component used in units of features;
a result data storing means (1408) for adding the result data of a feature arranged by said arrangement means (104) to said result data storage means (1409); and
a result data display means (403; 904) for searching and displaying the result data of a feature selected by said feature type selection means (101) from said result data storage means (1409).

4. A design support apparatus according to claim 3 , further comprising a product storage means (707) for storing product data such as external specifications, application conditions, know-how, wherein said result data display means (904) searches result data for a feature selected by said feature type selection means (101) together with a product information from said product data.

5. A design support method for combining features, each of which is a unit of various shapes, on a display image for design, comprising:
a feature type selection step (1601) for selecting a feature to be arranged from a feature storage means (105) in which feature data is stored;
a parameter input step (1603) for inputting parameters of a feature selected by said feature type selection step (1601) with reference to result data;
an arrangement step (1604) for arranging and displaying the feature selected by said feature type selection step (1601) depending on parameters inputted by said parameter input step (1603); and
a result data reference step (1602) for searching and displaying result data of the feature selected by said feature type selection step (1601) from a component storage means (106) in which component data is stored.

6. A design support method for combining features, each of which is a unit of various shapes, on a display image for design, comprising:
a feature type selection step (1601) for selecting a feature to be arranged from a feature storage means (105) in which feature data is stored;
a parameter input step (1603) or inputting parameters of the feature selected by said feature type selection step (1601) with reference to result data;
an arrangement step (1604) for arranging and displaying the feature selected by said feature type selection step (1601) depending on parameters inputted by said parameter input step (1603);
a result data storing step (3905) for storing result data of the feature arranged by said arrangement step (1604) to a result data storage means (1409); and
a result data display step (3603) for searching and displaying said result data to be referred by said parameter input step (1603) from said result data storage means (1409).

7. A design support apparatus according to claim 1, further comprising:
a feature group storage means (1702) for memorizing a feature group data; and
a similar feature acquisition means (1701) for acquiring a similar feature of the feature selected by said feature type selection means (101) from said feature group storage means (1702),
wherein said result data reference means (702) searches, from said component storage means (106), component data having at least a similar feature obtained by said similar feature acquisition means (1701) and displays result parameters of said component data.

8. A design support apparatus according to claim 3, further comprising:
a feature group storage means (1702) for memorizing a feature group data; and
a similar feature acquisition means (1701) for acquiring, from said feature group storage means (1702), a similar feature of the feature selected by said feature type selection means (101),
wherein said result data reference means (702) searches and displays, from said result data storage means (1409), result data having at least a similar feature obtained by said similar feature acquisition means (1701).

9. A design support apparatus for combining features, each of which is a unit of various shapes, on a display image for design, comprising:
a feature group storage means (1702) for memorizing feature group data, a feature storage means (105) for memorizing feature data, a component storage means (106) for memorizing component data,
a feature group selection means (2701) for selecting a feature group to be arranged from said feature group storage means (1702), a feature type selection means (101) for selecting a feature to be arranged from the feature group selected by said feature group selection means (2701) and the feature data memorized in said feature storage means (105), a parameter input means (103) for inputting parameters of the feature selected by said feature type selection means (101) with reference to result data, an arrangement means (104) for arranging and displaying the feature selected by said feature type selection means (101) depending on parameters inputted by said parameter input means (103); and
a result data reference means (702) for searching component data having at least a feature belonging to the feature group selected by said feature group selection means (2701) and displaying result data thereof.

10. A design support apparatus according to claim 9, further comprising a product storage means (707) for memorizing a product data,
wherein said result data reference means (702) searches result data for the feature selected by said feature type selection means (101) together with a product information from said product data.

11. A design support apparatus for combining features, each of which is a unit of various shapes, on a display image for design, comprising:
a feature group storage means (1702) for memorizing a feature group data; a feature storage means (105) for memorizing a feature data, a result data storage means (1409) for memorizing result data in units of features;
a feature group selection means (2701) for selecting a feature group to be arranged from said feature group storage means (1702); a feature type selection means (101) for selecting a feature to be arranged from the feature group selected by said feature group selection means (2701) and the feature data memorized in said feature storage means (105);
a parameter input means (103) for inputting parameters of the feature selected by said feature type selection means (101) with reference to result data; an arrangement means (104) for arranging the feature selected by said feature type selection means (101) depending on parameters inputted by said parameter input means (103);
a result data display means (402; 902) for searching and displaying result data of the feature belonging to the feature group selected by said feature group selection means (2701) from said result data storage means (1409); and a result data storing means (1408) for storing the result data of the feature arranged by said arrangement means (104) to said result data storage means (1409).

12. A design support apparatus according to claim 11, further comprising a product storage means (707) for memorizing a product data,
wherein said result data display means (902) searches result data of the feature belonging to the feature group selected by said feature group selection means (2701) together with a product information from said product data.

13. A design support method for combining features, each of which is a unit of various shapes, on a display image for design, comprising:
a feature group selection step (3201) for selecting a feature group from a feature group storage means (1702) for memorizing feature group data;
a result data reference step (1602) for searching, from a component storage means (106) for memorizing component data, component data having at least a feature belonging to the feature group selected by said feature group selection step (3201) and displaying result data of said component data;
a feature type selection step (1601) for selecting a feature to be arranged from the feature group selected by said feature group selection step (3201);
a parameter input step (1603) for inputting parameters of the feature selected by said feature type selection step (1601) with reference to said result data; and
an arrangement step (1604) for arranging the feature selected by said feature type selection step (1601) depending on said parameter input step (1603).

14. A design support method for combining features, each of which is a unit of various shapes, on a display image for design, comprising:
a feature group selection step (3201) for selecting a feature group from a feature group storage means (1702) for memorizing feature group data;
a result data display step (3603) for displaying result data of the feature belonging to the feature group selected by said feature group selection step (3201) from a result data storage means (1409) for memorizing result data in units of features;
a feature type selection step (1601) for selecting a feature to be arranged from the feature group selected by said feature group selection step (3201);
a parameter input step (1603) for inputting parameters of the feature selected by said feature type selection step (1601) with reference to said result data;
an arrangement step (1604) for arranging the feature selected by said feature type selection step (1601) depending on the parameters inputted by said parameter input step (1603); and
a result data storing step (3905) for storing the result data of the feature arranged by said arrangement step (1604) to a result data storage means (1409).

15. A result data display method for displaying parameters or the like in units of features comprising:
a component data search step (3601) for searching a component having a feature of the same kind as a desired feature from a component storage means (106) for memorizing component data;
a result data generation step (3803) for generating result data in units of features from the component data searched by said component data search step (3601); and
a result data display step (3603) for displaying result data in units of features generated by said result data generation step (3803).

16. A design support storage medium which may be read with a computer having installed data and program for design by combining features on a display image, storing:
a plurality of feature data;
a feature type selection means (101) for selecting a feature to be arranged from said feature data;
a parameter input means (103) for inputting parameters of the feature selected by said feature type selection means (101);
an arrangement means (104) for arranging and displaying the feature selected by said feature type selection means (101) depending on parameters inputted by said parameter input means (103);
component data for storing a type of feature and a result parameter of each component and a result data reference means (102) for searching component data having the feature of the same kind as the feature selected by said feature type selection means (101) from said component data and then displaying result parameters of said component data.

17. A design support storage medium which may be read with a computer having installed data and program for design by combining features on a display image, storing:
a plurality of feature data;
a feature type selection means (101) for selecting a feature to be arranged from said feature data;
a parameter input means (103) for inputting parameters of the feature selected by said feature type selection means (101);
an arrangement means (104) for arranging and displaying the feature selected by said feature type selection means (101) depending on the parameters inputted by said parameter input means (103);
a plurality of result data including the result parameters thereof in units of features;
a result data storing means (1408) for adding the result data of the feature arranged by said arrangement means (104) to said result data storage means (1409); and
a result data display means (904) for searching and displaying result data of the feature selected by said feature type selection means (101) from said result data storing means (1409).

18. A design support storage medium which may be read with a computer having installed data and program for design by combining features on a display image, storing:
a plurality of feature group data;
a plurality of feature data;
a plurality of component data;
a feature group selection means (2701) for selecting a feature group to be arranged from said feature group data;
a feature group selected by said feature group selection means (2701);
a feature type selection means (101) for selecting a feature to be arranged from said feature group;
a parameter input means (103) for inputting parameters of the feature selected by said feature type selection means (101);
an arrangement means (104) for arranging and displaying the feature selected by said feature type selection means (101) depending on the parameters inputted by said parameter input means (103); and
a result data reference means (102) for searching, from said component data, the component data having at least a feature belonging to the feature group selected by said feature group selection means (2701) and displaying result data of said component data.

19. A design support storage medium which may be read with a computer having installed data and program for design by combining features on a display image, storing:
a plurality of feature group data;
a plurality of feature data;
a plurality of result data for memorizing result data in units of features;
a feature group selection means (2701) for selecting a feature group to be arranged from said feature group data;
a feature type selection means (101) for selecting a feature to be arranged from the feature group selected by said feature group selection means (2701) and said feature data;
a parameter input means (103) for inputting parameters of the feature selected by said feature type selection means (101);
an arrangement means (104) for arranging the feature selected by said feature type selection means (101) depending on parameters inputted by said parameter input means (103);
a result data display means (403) for searching and displaying result data of the feature belonging to the feature group selected by said feature group selection means (2701) from said result data; and
a result data storing means (1408) for accumulating result data of the feature arranged by said arrangement means (104) to said result data.

20. A design support program which is executed by a computer for design by combining features on a display image, comprising:
a feature type selection step (1601) for selecting a feature to be arranged from a feature storage means (105) in which feature data is stored;
a parameter input step (1603) for inputting parameters of the feature selected by said feature type selection step (1601);
an arrangement step (1604) for arranging and displaying the feature selected by said feature type selection step (1601) depending on the parameters inputted by said parameter input step (1603); and
a result data reference step (1602) for searching and displaying result data of the feature selected by said feature type selection step (1601) from a component storage means in which component data is stored.

21. A design support program which is executed by a computer for design by combining features on a display image, comprising:
a feature type selection step (1601) for selecting a feature to be arranged from a feature storage means (105) in which feature data is stored;
a parameter input step (1603) or inputting parameters of the feature selected by said feature type selection step (1601);
an arrangement step (1604) for arranging and displaying the feature selected by the feature type selection step (1601) depending on the parameters inputted by said parameter input step (1603);
a result data storing step (3905) for storing result data of the feature arranged by said arrangement step (1604) to a result data storage means (1409); and
a result data display step (3603) for searching and displaying said result data to be referred by said parameter input step (1603) from said result data storage means (1409).

22. A design support program which is executed by a computer for design by combining features on a display image, comprising:
a feature group selection step (3201) for selecting a feature group from a feature group storage means (1702) in which feature group data is stored;
a result data reference step (1602) for searching, from a component storage means (106) in which component data is stored, component data having at least a feature belonging to the feature group selected by said feature group selection step (3201) and displaying result data of said component data;
a feature type selection step (1601) for selecting a feature to be arranged from the feature group selected by said feature group selection step (3201);
a parameter input step (1603) for inputting parameters of the feature selected by said feature type selection step (1601); and
an arrangement step (1604) for arranging the feature selected by said feature type selection step (1601) depending on the parameters inputted by said parameter input step (1603).

23. A design support program which is executed by a computer for design by combining features on a display image, comprising:
a feature group selection step (3201) for selecting a feature group from a feature group storage means (1702) in which feature group data is stored;
a result data display step (3603) for displaying result data of the feature belonging to the feature group selected by said feature group selection step (3201) from a result data storage means (1409) in which result data in units of features is stored;
a feature type selection step (1601) for selecting a feature to be arranged from the feature group selected by said feature group selection step (3201);
a parameter input step (1603) for inputting parameters of the feature selected by said feature type selection step (1601);
an arrangement step (1604) for arranging the feature selected by said feature type selection step (1601) depending on the parameters inputted by said parameter input step (1603); and
a result data storing step (3905) for memorizing result data of the feature arranged by said arrangement step (1604) to a result data storage means (1409).

24. A design support apparatus for design by combining libraries, each of which is a unit formed of a component or a plurality of components, on a display image, comprising:
a component and unit library storage means (4705) for memorizing library data;
a product structure storage means (4706) for memorizing product structure data;
a library type selection means (4701) for selecting a library to be arranged from said component and unit library storage means (4705);
a library parameter input means (4703) for inputting parameters of the library selected by said library type selection means (4701) with reference to result data;
a library arrangement means (4704) for arranging the library selected by said library type selection means (4701) depending on the parameters inputted by said library parameter input means (4703); and
a library result data reference means (4702) for searching a product structure data having the library of the same kind as the library selected by said library type selection means (4701) and displaying result data of said product structure data.

25. A design support apparatus for design by combining libraries, each of which is a unit formed of a component or a plurality of components , on a display image, comprising:
a component and unit library storage means (4705) for memorizing library data;
a library result data storage means (5409) for memorizing result data in unit of library;
a library type selection means (4701) for selecting a library to be arranged from said component and unit library storage means (4705);
a library parameter input means (4703) for inputting parameters of the library selected by said library type selection means (4701) with reference to result data;
a library arrangement means (4704) for arranging the library selected by said library type selection means (4701) depending on the parameters inputted by said library parameter input means (4703),
a library result data storing means (5408) for memorizing result data of the library arranged by said library arrangement means (4704) to said library result data storage means (5409) and a library result data display means (5003) for displaying result data of the library selected by said library type selection means (4701) from said library result data storage means (5409).

26. A design support apparatus for design by combining libraries, each of which is a unit formed of a component or a plurality of components, on a display image, comprising:
a library group storage means (5802) for memorizing library group data, a product structure storage means (4706) for memorizing product structure data and a component and unit library storage means (4705) for memorizing library data;
a library group selection means (6501) for selecting a library group to be arranged from said library group storage means (5802);
a library result data reference means (4702) for searching, from said product structure storage means (4706), a product structure data having at least a library belonging to the library group selected by said library group selection means (6501) and displaying result data of said product structure data;
a library type selection means (4701) for selecting a library to be arranged from the library group selected by said library group selection means (6501) and said component and unit library storage means (4705);
a library parameter input means (4703) for inputting parameters of the library selected by said library type selection means (4701) with reference to said result data; and a library arrangement means (4704) for arranging the library selected by said library type selection means (4701) depending on the parameters inputted by said library parameter input means (4703).

27. A design support apparatus for design by combining libraries, each of which is a unit formed of a component or a plurality of components, on a display image, comprising:
a library group storage means (5802) for memorizing library group data; a library result data storage means (5409) for memorizing result data in unit of library; a component and unit library storage means (4705) for memorizing library data; a library group selection means (6501) for selecting a library group to be arranged from said library group storage means (5802); a result data display means (5003) for displaying result data of the library belonging to the library group selected by said library group selection means (6501) from said library result data storage means (5409); a library type selection means (4701) for selecting a library to be arranged from the library group selected by said library group selection means (6501) and a library data stored in said component and unit library storage means (4705); a library parameter input means (4703) for inputting parameters of the library selected by said library type selection means (4701) with reference to said result data; a library arrangement means (4704) for arranging the library selected by said library type selection means (4701) depending on the parameters inputted by said parameter input means (4703); and a library result data storing means (5409) for storing result data of the library arranged by said library arrangement means (4704) to said library result data storage means (5409).

28. A design support method for design by combining libraries, each of which is a unit formed of a component or a plurality of components , on a display image, comprising:
a library type selection step (5501) for selecting a library to be arranged by a component and unit library storage means (4705) in which library data is stored;
a library parameter input step (5503) for inputting parameters of the library selected by said library type selection step (5501);
a library arrangement step (5504) for arranging and displaying the library selected by said library type selection step (5501) depending on the parameters inputted by said library parameter input step (5503); and
a library result data reference step (5502) for searching a product structure data having the library selected by said library type selection step (5501) from a product structure storage means (4706) in which product structure data is stored and displaying result data of said product structure data.

29. A design support method for design by combining libraries, each of which is a unit formed of a component or a plurality of components, on a display image, comprising:
a library type selection step (5501) for selecting a library to be arranged from a component and unit library storage means (4705) in which library data is stored;
a library parameter input step (5503) for inputting parameters of the library selected by said library type selection step (5501);
a library arrangement step (5504) for arranging and displaying the library selected by said library type selection step (5501) depending on the parameters inputted by said library parameter input step (5503);
a result data storing step (5705) for storing result data of the library arranged by said library arrangement step (5504) to a library result data storage means (5409); and
a result data display step (5603) for displaying result data of the library selected by said library type selection step (5501) from said library result data storage means (5409).

30. A design support method for design by combining libraries, each of which is a unit formed of a component or a plurality of components, on a display image, comprising:
a library group selection step (6801) for selecting a library group from a library group storage means (5802) in which library group data is stored;
a library result data reference step (5502) for searching, from a product structure storage means (4706) in which product structure data is stored, a product structure data having at least a library belonging to the library group selected by said library group selection step (6801) and displaying result data of said product structure data;
a library type selection step (5501) for selecting a library to be arranged from the library group selected by said library group selection step (6801);
a parameter input step (5503) for inputting parameters of the library selected by said library type selection step (5501); and
a library arrangement step (5504) for arranging the library selected by said library type selection step (5501) depending on the parameters inputted by said library parameter input step (5503).

31. A design support method for design by combining libraries, each of which is a unit formed of a component or a plurality of components, on a display image, comprising:
a library group selection step (6801) for selecting a library group from a library group storage means (5802) in which library group data is stored;
a result data display step (5603) for displaying result data of the library belonging to the library group selected by said library group selection step (6801) from a library result data storage means (5409) in which result data in unit of library is stored;
a library type selection step (5501) for selecting a library to be arranged from the library group selected by said library group selection step (6801);
a library parameter input step (5503) for inputting parameters of the library selected by said library type selection step (5501);
a library arrangement step (5504) for arranging the library selected by said library type selection step (5501) depending on the parameters inputted by said library parameter input step (5503); and
a result data storing step (5705) for memorizing result data of the library arranged by said library arrangement step (5504) to a library result data storage means (5409).

32. A design support storage medium which may be read by a computer having installed data and program for design by combining libraries of component and unit on a display image, comprising:
a plurality of library data; a plurality of product structure data; a library type selection means (4701) for selecting a library to be arranged from said library data; a library parameter input means (4703) for inputting parameters of the library selected by said library type selection means (4701); a library arrangement means (4704) for arranging the library selected by said library type selection means (4704) depending on the parameters inputted by said library parameter input means (4703) and a library result data reference means (4702) for searching, from said product structure data, a product structure data having a library of the same kind as the library selected by said library type selection means (4701) and displaying result data of said product structure data.

33. A design support storage medium which may be read by a computer having installed data and program for design by combining libraries of component and unit on a display image, comprising:
a plurality of library data; result data in unit of library; a library type selection means (4701) for selecting a library to be arranged by said library data; a library parameter input means (4703) for inputting parameters of the library selected by said library type selection means (4701); a library arrangement means (4704) for arranging the library selected by said library type selection means (4701) depending on parameters inputted by said library parameter input means (4703); a result data storing means (5408) for accumulating result data of the library arranged by said library arrangement means (4704) to said library result data and a library result data display means (5003) for displaying result data of the library selected by said library type selection means (4701) from said library result data.

34. A design support storage medium which may be read by a computer having installed data and program for design by combining libraries of component and unit on a display image, comprising:
a plurality of library group data; a plurality of product structure data; a plurality of library data; a library group selection means (6501) for selecting a library group to be arranged from said library group storage means (5802); a library result data reference means (4702) for searching, from said product structure data, a product structure data having at least a library belonging to the library group selected by said library group selection means (6501) and displaying result data of said product structure data; a library type selection means (4701) for selecting a library to be arranged from the library group selected by said library group selection means (6501) and said library data; a library parameter input means (4703) for inputting parameters of the library selected by said library type selection means (4701) and a library arrangement means (4704) for arranging the library selected by said library type selection means (4701) depending on the parameters inputted by said library parameter input means (4703).

35. A design support storage medium which may be read by a computer having installed data and program for design by combining libraries of component and unit, comprising:
a plurality of library group data; result data in unit of library; a plurality of library data; a library group selection means (6501) for selecting a library group to be arranged from said library group data; a result data display means (5003) for displaying result data of the library belonging to the library group selected by said library group selection means (6501); a library type selection means (4701) for selecting a library to be arranged from the library group selected by said library group selection means (6501) and said library data; a parameter input means (4703) for inputting parameters of the library selected by said library type selection means (4701); a library arrangement means (4704) for arranging the library selected by said library type selection means (4701) depending on the parameters inputted by said library parameter input means (4703) and a library result data storing means (5408) for accumulating result data of the library arranged by said library arrangement means (4704) to said library data.

36. A design support program which is executed by a computer for design by combining libraries of component and unit on a display image, comprising:
a library type selection step (5501) for selecting a library to be arranged from a component and unit library storage means (4705) in which library data is stored;
a library parameter input step (5503) for inputting parameters of the library selected by said library type selection step (5501);
a library arrangement step (5504) for arranging and displaying the library selected by said library type selection step (5501) depending on the parameters inputted by said library parameter input step (5503); and
a library result data reference step (5502) for searching a product structure data having the library selected by said library type selection step (5501) from a product structure storage means (4706) in which product structure data is stored and displaying result data of said product structure data.

37. A design support program which is executed by a computer for design by combining libraries of component and unit on a display image, comprising;
a library type selection step (5501) for selecting a library to be arranged from a component and unit library storage means (4705) in which library data is stored;
a library parameter input step (5503) for inputting parameters of the library selected by said library type selection step (5501);
a library arrangement step (5504) for arranging and displaying the library selected by said library type selection step (5501) depending on the parameters inputted by said library parameter input step (5503);
a result data storing step (5705) for storing result data of the library arranged by said library arrangement step (5504) to a library result data storage means (5408); and
a result data display step (5603) for displaying result data of the library selected by said library type selection step (5501) from said library result data storage means (5408).

38. A design support program which is executed by a computer for design by combining libraries of component and unit on a display image, comprising:
a library group selection step (6801) for selecting a library group from a library group storage means (5802) in which library group data is stored;
a library result data reference step (5502) for searching, from a product structure storage means (4706) for memorizing product structure data, a product structure data having at least a library belonging to the library group selected by said library group selection step (6801) and displaying result data of said product structure data;
a library type selection step (5501) for selecting a library to be arranged from the library group selected by said library group selection step (6801);
a library parameter input step (5503) for inputting parameters of the library selected by said library type selection step (5501); and
a library arrangement step (5504) for arranging the library selected by said library type selection step (5501) depending on the parameters inputted by said library parameter input step (5503).

39. A design support program which is executed by a computer for design by combining libraries of component and unit on a display image, comprising:
a library group selection step (6801) for selecting a library group from a library group storage means (5802) in which library group data is stored;
a result data display step (5603) for displaying result data of the library belonging to the library group selected by said library group selection step (6801) from a library result data storage means (5409) for memorizing result data in unit of library;
a library type selection step (5501) for selecting a library to be arranged from the library group selected by said library group selection step (6801);
a library parameter input step (5503) for inputting parameters of the library selected by said library type selection step (5501);
a library arrangement step (5504) for arranging the library selected by said library type selection step (5501) depending on the parameters inputted by said library parameter input step (5503); and
a result data storing step (5705) for memorizing result data of the library arranged by said library arrangement step (5504) to a library result data storage means (5409).
